**Europäisches Patentamt**

**European Patent Office**

**Office européen des brevets**

(19)

(11) **EP 1 536 271 A1**

(12)

# EUROPEAN PATENT APPLICATION
published in accordance with Art. 158(3) EPC

(43) Date of publication:
**01.06.2005 Bulletin 2005/22**

(51) Int Cl.⁷: **G02F 1/167**, G02F 1/17

(21) Application number: **03760932.8**

(22) Date of filing: **20.06.2003**

(86) International application number:
**PCT/JP2003/007892**

(87) International publication number:
**WO 2004/001498 (31.12.2003 Gazette 2004/01)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **21.06.2002 JP 2002182041**
**21.06.2002 JP 2002182042**
**05.07.2002 JP 2002197185**
**05.07.2002 JP 2002197332**
**09.07.2002 JP 2002200125**
**09.07.2002 JP 2002200126**
**23.07.2002 JP 2002213990**
**23.07.2002 JP 2002213992**
**17.12.2002 JP 2002364895**
**17.12.2002 JP 2002364899**
**17.12.2002 JP 2002364755**
**17.12.2002 JP 2002364905**

(71) Applicant: **Bridgestone Corporation**
**Tokyo 104-8340 (JP)**

(72) Inventors:
• **SAKURAI, Ryou**
**Kokubunji-shi, Tokyo 185-0003 (JP)**
• **KITANO, Hajime**
**Kodaira-shi, Tokyo 187-0031 (JP)**

• **NIHEI, Norio**
**Kodaira-shi, Tokyo 187-0031 (JP)**
• **MURATA, Kazuya**
**Hino-shi, Tokyo 191-0016 (JP)**
• **YAKUSHIJI, Gaku**
**Higashiyamato-shi, Tokyo 207-0022 (JP)**
• **KAGA, Norihiko**
**Kodaira-shi, Tokyo 187-0031 (JP)**
• **ARAI, Toshiaki**
**Funabashi-shi, Chiba 273-0031 (JP)**
• **MASUDA, Yoshitomo**
**Hamura-shi, Tokyo 205-0023 (JP)**
• **YAMAZAKI, Hirotaka**
**Kunitachi-shi, Tokyo 186-0005 (JP)**
• **KOTSUBO, Hidefumi**
**Kodaira-shi, Tokyo 187-0031 (JP)**
• **YOSHIKAWA, Masato**
**Kodaira-shi, Tokyo 187-0022 (JP)**
• **OONO, Shingo**
**Kodaira-shi, Tokyo 187-0031 (JP)**
• **IWABUCHI, Yoshinori**
**Kodaira-shi, Tokyo 187-0031 (JP)**

(74) Representative: **Whalley, Kevin**
**Marks & Clerk**
**90 Long Acre**
**London WC2E 9RA (GB)**

(54) **IMAGE DISPLAY AND METHOD FOR MANUFACTURING IMAGE DISPLAY**

(57) In a first aspect of the invention, an image display device, in which one or more groups of particles or liquid powders are sealed between opposed two substrates, at least one of two substrates being transparent, and, in which the particles or the liquid powders, to which an electrostatic field produced by two groups of electrodes having different potentials is applied, are made to move so as to display an image, has a construction such that a member for transmitting a signal, which is applied to circuits for an image display, is provided to the substrate by means of an anisotropic conductive film and members such as the electrode are provided to a substrate opposed to a transparent substrate. In second to sixth aspects of the invention, an image display device has a construction such that the electrode is arranged to a surface of the substrate through a transparent elastic member, or, an anti-reflection layer is arranged, or, a connection operation between two substrates through a partition wall is optimized.

# FIG. 1

**Description**

TECHNICAL FIELD

The present invention relates to an image display device, which comprises an image display panel enables to repeatedly display or delete images accompanied by flight and movement of particles utilizing Coulomb's force and so on, and a method of manufacturing the same.

BACKGROUND ART

As an image display device substitutable for liquid crystal display (LCD), image display devices with the use of technology such as an electrophoresis method, an electro-chromic method, a thermal method, dichroic-particles-rotary method are proposed.

As for these image display device, it is conceivable as inexpensive visual display device of the next generation from a merit having wide field of vision close to normal printed matter, having smaller consumption with LCD, spreading out to a display for portable device, and an electronic paper is expected. Recently, electrophoresis method is proposed that microencapsulate dispersion liquid made up with dispersion particles and coloration solution and dispose the liquid between faced substrates.

However, in the electrophoresis method, there is a problem that a response rate is slow by the reason of viscosity resistance because the particles migrate among the electrophoresis solution. Further, there is a problem of lacking imaging repetition stability, because particles with high specific gravity of titanium oxide is scattered within solution of low specific gravity, it is easy to subside, difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed. [The Imaging Society of Japan "Japan Hardcopy '99" (July 21-23, 1999) Transaction Pages 249-252] However, the structure becomes complicated because the charge transport layer and further a charge generation layer are to be arranged. In addition, it is difficult to constantly dissipate charges from the electro-conductive particles, and thus there is a drawback on the lack of stability (common tasks to be solved by first to sixth aspects of the invention).

Moreover, when an electrode is provided in the image display device, it takes a long time to provide the electrode according to the known method. Therefore, there is a drawback such that a manufacturing efficiency of the image display device is low and further a substrate is adversely affected due to heating (task to be solved by the first aspect of the invention).

Further, when such a dry-type display plate is integrated with an optical function member having an anti-reflection function or a touch panel function and used as ATM or CD in the bank, a portable information terminal, a mobile phone, a display for computer and so on, there is a drawback such that a clear image is not obtained (task to be solved by the second aspect of the invention).

Moreover, it is required to achieve a high contrast image by increasing a light transmittance and to improve a visibility so as to obtain a high contrast image. However, there is a drawback such that some requirements are not achieved (task to be solved by the third aspect of the invention).

Further, as one method of solving various problems mentioned above, it is known an image display device which comprises an image display panel, in which two or more groups of particles or liquid powders having different colors and different charge characteristics are sealed between two substrates, at least one of two substrates being transparent, and, in which the particles or the liquid powders, to which an electrostatic field produced by a pair of electrodes having different potentials is applied, are made to move by means of Coulomb's force so as to display an image. In the image display device mentioned above, since it is a dry-type, it is possible to achieve rapid response, simple construction, inexpensive cost and excellent image stability. However, since it uses the particles or the liquid powders for the image displaying, there is a drawback such that it is difficult to eliminate a positional deviation between the substrates and a leakage of the particles or the liquid powders by sealing two substrates by means of adhesives under the condition such that the particles or the liquid powders are existent between them (task to be solved by the fourth aspect of the invention).

Moreover, in order to solve the problems mentioned above, as an image display device of dry-type having rapid response, simple construction, inexpensive cost and excellent stability, it is known an image display device which comprises an image display panel, in which two groups of particles or liquid powders having different colors and different charge characteristics are sealed between a transparent substrate and an opposed substrate, and, in which the particles or the liquid powders, to which an electrostatic field produced by two groups of electrodes having different potentials is applied, are made to move so as to display an image. In the image display device, image display elements are formed by arranging partition walls between the transparent substrate and the opposed substrate.

In the image display device having the construction mentioned above, the partition wall arrangement is performed by positioning the partition wall between the transparent substrate and the opposed substrate and applying adhesives to a corner portion between the substrate and the partition wall. In this case, if use is made of a glass substrate as the transparent substrate or the opposed substrate, a connection between the substrate and the partition wall has a sufficient strength. However, if use is made of other transparent resins, there is a drawback such that a sufficient connection strength can not be obtained. Therefore, it is not possible to eliminate a leakage of the particles or the liquid powders completely (task to be solved by the sixth aspect of the invention).

DISCLOSURE OF INVENTION

A first embodiment of a first aspect of the invention relates to a new type image display device which is investigated to overcome the problems mentioned above and has for its object to effectively manufacture the image display device having an excellent performance, which can achieve a rapid response, simple construction, inexpensive cost and excellent stability and further arrange electrodes in a short time.

The inventors perform various investigation and find that it is possible to effectively manufacture the image display device having an excellent performance by means of the following image display device. That is, in the image display device, in which one or more groups of particles are sealed between opposed two substrates, at least one of two substrates being transparent, are made to move so as to display an image, an anisotropic conductive film in which conductive powders are scattered in an adhesive for connecting electrodes. The present invention is achieved by this finding.

According to the first embodiment of the first aspect of the invention, the following image display devices are provided:

1. An image display device, in which one or more groups of particles are sealed between opposed two substrates, at least one of two substrates being transparent, and, in which the particles, to which an electrostatic field is applied, are made to move so as to display an image, characterized in that a member for transmitting a signal, which is supplied to circuits for an image display, is provided to the substrate by means of an anisotropic conductive film;

2. The image display device according to the above 1, wherein an average particle diameter of the particles is 0.1 - 50 $\mu$m;

3. The image display device according to the above 1 or 2, wherein the difference of a surface charge density between two groups of the particles measured by using the same kind of carrier in accordance with a blow-off method is 5 - 150 $\mu$C/m$^2$;

4. The image display device according to one of the above 1 - 3, wherein the particles are particles in which the maximum surface potential, in the case that the surface of particles is charged by a generation of Corona discharge caused by applying a voltage of 8 KV to a Corona discharge device deployed at a distance of 1 mm from the surface of the particles, is greater than 300 V at 0.3 second after the Corona discharge;

5. The image display device according to one of the above 1 - 4, wherein the anisotropic conductive film is formed by scattering conductive particles in a thermosetting adhesive or a photo-curing adhesive;

6. The image display device according to the above 5, wherein a diameter of the conductive particles scattered in the thermosetting adhesive or the photo-curing adhesive is 0.1 - 20 $\mu$m; and

7. The image display device according to the above 5 or 6, wherein the thermosetting adhesive or the photo-curing adhesive includes one or more groups of compounds having one of glycidyl group, acrylic group and methacrylic group.

A second embodiment of a first aspect of the invention relates to a new dry type image display device which is investigated to overcome the problems mentioned above and has for its object, in a device for repeatedly display an image by utilizing an electrostatic, to effectively manufacture the image display device having an excellent performance, which can achieve inexpensive cost and excellent stability and further arrange electrodes in a short time.

The inventors perform various investigations and find that it is possible to obtain new image display device which achieve rapid response, inexpensive cost, excellent stability and low driving voltage, by using liquid powders having a fluidity that is a feature of a liquid and a shape memory property that is a feature of a solid. Moreover, the inventors find that it is possible to effectively manufacture the image display device having an excellent performance by providing a member for transmitting a signal, which is supplied to circuits for an image display, to the substrate by means of an anisotropic conductive film. The present invention is achieved by these findings.

According to the second embodiment of the first aspect of the invention, the following image display devices are provided:

1. An image display device, in which liquid powders, which indicate a high fluidity in an aerosol state such that solid-like substances are suspended in a gas stably as dispersoid, are sealed between opposed two substrates, at least one of two substrates being transparent, and, in which the liquid powders are made to move, characterized in that a member for transmitting a signal, which is applied to circuits for an image display, is provided to the substrate by means of an anisotropic conductive film;

2. The image display device according to the above 1, wherein an apparent volume in a maximum floating state of the liquid powders is two times or more than that in none floating state;

3. The image display device according to the above 1 or 2, wherein a time change of the apparent volume of the liquid powders satisfies the following formula:

$$V_{10}/V_5 > 0.8;$$

here, $V_5$ indicates the apparent volume ($cm^3$) of the liquid powders after 5 minutes from the maximum floating state; and $V_{10}$ indicates the apparent volume ($cm^3$) of the liquid powders after 10 minutes from the maximum floating state;

4. The image display device according to one of the above 1 - 3, wherein an average particle diameter d(0.5) of the liquid powders is 0.1 - 20 $\mu$m;

5. The image display device according to one of the above 1 - 4, wherein the anisotropic conductive film is formed by scattering conductive particles in a thermosetting adhesive or a photo-curing adhesive;

6. The image display device according to the above 5, wherein a diameter of the conductive particles scattered in the thermosetting adhesive or the photo-curing adhesive is 0.1 - 20 $\mu$m; and

7. The image display device according to the above 5 or 6, wherein the thermosetting adhesive or the photo-curing adhesive includes one or more groups of compounds having one of glycidyl group, acrylic group and methacrylic group.

A first embodiment of a second aspect of the invention relates to an image display device using a dry type electrostatic display panel and has for its object to provide the image display device having simple construction and excellent stability, which is integrated with an optical function member in which a sharp image can be obtained.

The inventors perform various investigations and find that, when an image display panel, in which one or more groups of particles are sealed between opposed two substrates, at least one of two substrates being transparent, and, in which the particles, to which an electrostatic field produced by two groups of electrodes having different potentials is applied, are made to move so as to display an image, and an optical function member are integrated through a transparent layer, it is possible to obtain simple construction, excellent stability and sharp image. The present invention is achieved by this finding.

According to the first embodiment of the second aspect of the invention, the following image display devices are provided:

1. An image display device which comprises an image display panel and an optical function member, in which one or more groups of particles are sealed between opposed two substrates, at least one of two substrates being transparent, and, in which the particles, to which an electrostatic field produced by two groups of electrodes having different potentials is applied, are made to move so as to display an image, characterized in that the image display panel and the optical function member are integrated through a transparent elastic layer;

2. The image display device according to the above 1, wherein an average particle diameter of the particles is 0.1 - 50 $\mu$m;

3. The image display device according to the above 1 or 2, wherein the difference of a surface charge density in an absolute value between two groups of the particles measured by using the same kind of carrier in accordance with a blow-off method is 5 - 150 $\mu$C/$m^2$;

4. The image display device according to one of the above 1 - 3, wherein the particles are particles in which the maximum surface potential, in the case that the surface of particles is charged by a generation of Corona discharge caused by applying a voltage of 8 KV to a Corona discharge device deployed at a distance of 1 mm from the surface of the particles, is greater than 300 V at 0.3 second after the Corona discharge;

5. The image display device according to one of the above 1 - 4, wherein, when it is assumed that a refractive index of the transparent elastic layer is no, a refractive index of the optical function member is $n_1$ and a refractive index of the transparent substrate is $n_2$, an absolute of a difference between $n_0$ and $n_1$ and an absolute of a difference between $n_0$ and $n_2$ are not greater than 0.2 respectively; and

6. The image display device according to one of the above 1 - 5, wherein the transparent elastic layer has a property such that, when it is assumed that a strain ($\varepsilon_0$) at 25°C of a stress relaxation is 5 % and an initial value (after 0.05 sec) of a stress relaxation elastic modulus is $G_0$, $G_0$ is not greater than $6.5 \times 10^6$ Pa, and, a property such that a stress relaxation time $\tau$ calculated on the basis of a formula:

$$\ln G(t) = - t/\tau + \ln G_0$$

showing a relation between a stress relaxation elastic modulus G and a time t (sec.) obtained from a damping curve of the relaxation elastic modulus, is not greater than 17 sec.

A second embodiment of a second aspect of the invention relates to a new dry type image display device which is investigated to overcome the problems mentioned above and has for its object, in a method for repeatedly display an image by utilizing an electrostatic, to provide the image display device having simple construction and excellent stability, which is integrated with an optical function member in which a sharp image can be obtained.

The inventors perform various investigations and find that it is possible to obtain an image display panel which achieve rapid response, inexpensive cost, excellent stability and low driving voltage, by using liquid powders having a fluidity that is a feature of a liquid and a shape memory property that is a feature of a solid. Moreover, the inventors find that it is possible to obtain a new image display device having a sharp image by integrating the image display panel mentioned above and the optical function member through a transparent elastic layer.

According to the second embodiment of the second aspect of the invention, the following image display devices are provided:

1. An image display device which comprises an image display panel and an optical function member, in which liquid powders, which indicate a high fluidity in an aerosol state such that solid-like substances are suspended in a gas stably as dispersoid, are sealed between opposed two substrates, at least one of two substrates being transparent, and, in which the liquid powders are made to move, characterized in that the image display panel and the optical function member are integrated through a transparent elastic layer;

2. The image display device according to the above 1, wherein an apparent volume in a maximum floating state of the liquid powders is two times or more than that in none floating state;

3. The image display device according to the above 1 or 2, wherein a time change of the apparent volume of the liquid powders satisfies the following formula:

$$V_{10}/V_5 > 0.8;$$

here, $V_5$ indicates the apparent volume ($cm^3$) of the liquid powders after 5 minutes from the maximum floating state; and $V_{10}$ indicates the apparent volume ($cm^3$) of the liquid powders after 10 minutes from the maximum floating state;

4. The image display device according to one of the above 1 - 3, wherein an average particle diameter d(0.5) of the liquid powders is 0.1 - 20 $\mu$m;

5. The image display device according to one of the above 1 - 4, wherein, when it is assumed that a refractive index of the transparent elastic layer is no, a refractive index of the optical function member is $n_1$ and a refractive index of the transparent substrate is $n_2$, an absolute of a difference between $n_0$ and $n_1$ and an absolute of a difference between $n_0$ and $n_2$ are not greater than 0.2 respectively; and

6. The image display device according to one of the above 1 - 5, wherein the transparent elastic layer has a property such that, when it is assumed that a strain ($\varepsilon_0$) at 25 °C of a stress relaxation is 5 % and an initial value (after 0.05 sec) of a stress relaxation elastic modulus is Go, Go is not greater than $6.5 \times 10^6$ Pa, and, a property such that a stress relaxation time $\tau$ calculated on the basis of a formula:

$$\ln G(t) = - t/\tau + \ln G_0$$

showing a relation between a stress relaxation elastic modulus G and a time t (sec.) obtained from a damping curve of the relaxation elastic modulus, is not greater than 17 sec.

A first embodiment of a third aspect of the invention relates to a dry type electrostatic display device and has for its object to provide the image display device having simple construction and excellent stability, which can achieve a high contrast by increasing a light transmission and obtain a sharp image.

The inventors perform various investigations and find that, when plural layers each indicating different refractive index are arranged on a surface of a transparent substrate of an image display device, in which one or more groups of particles are sealed between opposed two substrates, at least one of two substrates being transparent, and, in which the particles, to which an electrostatic field produced by two groups of electrodes having different potentials is applied, are made to move so as to display an image, it is possible to obtain simple construction, excellent stability, light transmission increase due to a suppression of outside light reflection, high contrast and sharp image.

According to the first embodiment of the third aspect of the invention, the following image display devices are provided:

1. An image display device, in which one or more groups of particles are sealed between opposed two substrates, at least one of two substrates being transparent, and, in which the particles, to which an electrostatic field produced by two groups of electrodes having different potentials is applied, are made to move so as to display an image, characterized in that an anti-reflection layer having plural layers each indicating different refractive index is arranged on a surface of the transparent substrate;

2. The image display device according to the above 1, wherein an average particle diameter of the particles is 0.1 - 50 µm;

3. The image display device according to the above 1 or 2, wherein the difference of a surface charge density in an absolute value between two groups of the particles measured by using the same kind of carrier in accordance with a blow-off method is 5 - 150 $\mu C/m^2$;

4. The image display device according to one of the above 1 - 3, wherein the particles are particles in which the maximum surface potential, in the case that the surface of particles is charged by a generation of Corona discharge caused by applying a voltage of 8 KV to a Corona discharge device deployed at a distance of 1 mm from the surface of the particles, is greater than 300 V at 0.3 second after the Corona discharge;

5. The image display device according to one of the above 1 - 4, wherein the anti-reflection layer is constructed by stacking a low reflection layer produced by a sputtering process using a conductive silicon carbide as a target and a high reflection layer produced by a sputtering process using a conductive titanium oxide as a target; and

6. The image display device according to the above 5, wherein the anti-reflection layer prevents a light reflection of which wavelength is 380 - 780 nm and a light reflection rate is not greater than 10 %.

A second embodiment of a third aspect of the invention relates to a new dry type image display device which is investigated to overcome the problems mentioned above and has for its object, in a method for repeatedly display an image by utilizing an electrostatic, to provide the image display device having simple construction and excellent stability, which can achieve a high contrast by increasing a light transmission and obtain a sharp image.

The inventors perform various investigations and find that it is possible to obtain an image display device which achieve rapid response, inexpensive cost and excellent stability, by using liquid powders having a fluidity that is a feature of a liquid and a shape memory property that is a feature of a solid. Moreover, the inventors find that it is possible to improve a visibility since a sharp image can be obtained by arranging an anti-reflection layer to a transparent substrate. The present invention is achieved by theses findings.

According to the second embodiment of the third aspect of the invention, the following image display devices are provided:

1. An image display device, in which liquid powders, which indicate a high fluidity in an aerosol state such that solid-like substances are suspended in a gas stably as dispersoid, are sealed between opposed two substrates, at least one of two substrates being transparent, and, in which the liquid powders are made to move, characterized in that an anti-reflection layer having plural layers each indicating different refractive index is arranged on a surface of the transparent substrate;

2. The image display device according to the above 1, wherein an apparent volume in a maximum floating state of the liquid powders is two times or more than that in none floating state;

3. The image display device according to the above 1 or 2, wherein a time change of the apparent volume of the liquid powders satisfies the following formula:

$$V_{10}/V_5 > 0.8;$$

here, $V_5$ indicates the apparent volume ($cm^3$) of the liquid powders after 5 minutes from the maximum floating state; and $V_{10}$ indicates the apparent volume ($cm^3$) of the liquid powders after 10 minutes from the maximum floating state;

4. The image display device according to one of claims 1 - 3, wherein an average particle diameter d(0.5) of the liquid powders is 0.1 - 20 µm;

5. The image display device according to one of claims 1 - 4, wherein the anti-reflection layer is constructed by stacking a low reflection layer produced by a sputtering process using a conductive silicon carbide as a target and a high reflection layer produced by a sputtering process using a conductive titanium oxide as a target; and

6. The image display device according to one of claims 1 - 5, wherein the anti-reflection layer prevents a light reflection of which wavelength is 380 - 780 nm and a light reflection rate is not greater than 10 %.

A first embodiment of a fourth aspect of the invention relates to a dry type image display device having rapid response, simple construction, inexpensive cost and excellent stability and has for its object to provide the image display device comprising an image display panel which can achieve no positional deviation between substrates, prevent a leakage of particles and obtain a high image display accuracy.

According to the first embodiment of the fourth aspect of the invention, an image display device which comprises an image display panel, in which two or more groups of particles having different colors and different charge characteristics are sealed between opposed two substrates, at least one of two substrates being transparent, and, in which the particles, to which an electrostatic field produced by a pair of electrodes arranged on one substrate or both substrates is applied, are made to move so as to display an image, is characterized in that two substrates of the image display panel are connected by using a thermosetting adhesive or a photo-curing adhesive.

In the image display panel used in the image display device according to the first embodiment of the fourth aspect of the invention, since two substrates i.e. a transparent substrate and an opposed substrate are connected by using the thermosetting adhesive or the photo-curing adhesive, it is possible to harden the adhesive in a short time by applying a heat or irradiating a light after setting two substrates through the adhesive at a predetermined position. As a result, it is possible to prevent the positional deviation between the substrates and the leakage of the particles. Moreover, it is possible to achieve the high image display accuracy of the image display panel.

In the image display device according to the first embodiment of the fourth aspect of the invention, it is preferred that the thermosetting adhesive or the photo-curing adhesive includes one or more groups of compounds having one of glycidyl group, acrylic group and methacrylic group. Moreover, it is preferred that wherein an average particle diameter of the particles is 0.1 - 50 $\mu$m. Further, it is preferred that the difference of a surface charge density in an absolute value between two groups of the particles measured by using the same kind of carrier in accordance with a blow-off method is 5 - 150 $\mu$C/m$^2$. Furthermore, it is preferred that the particles are particles in which the maximum surface potential, in the case that the surface of particles is charged by a generation of Corona discharge caused by applying a voltage of 8 KV to a Corona discharge device deployed at a distance of 1 mm from the surface of the particles, is greater than 300 V at 0.3 second after the Corona discharge.

A second embodiment of a fourth aspect of the invention relates to an image display device having rapid response, inexpensive cost, improved stability and a low driving voltage and has for its object to provide the image display device comprising an image display panel which can achieve no positional deviation between the substrates, prevent a leakage of liquid powders and obtain a high image display accuracy.

According to the second embodiment of the fourth aspect of the invention, an image display device which comprises an image display panel, in which liquid powders, which indicate a high fluidity in an aerosol state such that solid-like substances are suspended in a gas stably as dispersoid, are sealed between opposed two substrates, at least one of two substrates being transparent, and, in which the liquid powders, to which an electrostatic field produced by a pair of electrodes arranged on one substrate or both substrates is applied, are made to move so as to display an image, is characterized in that two substrates of the image display panel are connected by using a thermosetting adhesive or a photo-curing adhesive.

In the image display panel used in the image display device according to the second embodiment of the fourth aspect of the invention, since two substrates i.e. a transparent substrate and an opposed substrate are connected by using the thermosetting adhesive or the photo-curing adhesive, it is possible to harden the adhesive in a short time by applying a heat or irradiating a light after setting two substrates through the adhesive at a predetermined position. As a result, it is possible to prevent the positional deviation between the substrates and the leakage of the liquid powders. Moreover, it is possible to achieve the high image display accuracy of the image display panel.

In the image display device according to the second embodiment of the fourth aspect of the invention, it is preferred that the thermosetting adhesive or the photo-curing adhesive includes one or more groups of compounds having one of glycidyl group, acrylic group and methacrylic group. Moreover, it is preferred that an apparent volume in a maximum floating state of the liquid powders is two times or more than that in none floating state. Further, it is preferred that a time change of the apparent volume of the liquid powders satisfies the following formula:

$$V_{10}/V_5 > 0.8;$$

here, $V_5$ indicates the apparent volume (cm$^3$) of the liquid powders after 5 minutes from the maximum floating state;

and $V_{10}$ indicates the apparent volume (cm³) of the liquid powders after 10 minutes from the maximum floating state. Furthermore, it is preferred that an average particle diameter d(0.5) of the liquid powders is 0.1 - 20 μm.

A first embodiment of a fifth aspect of the invention relates to a dry type image display device having rapid response, simple construction, inexpensive cost and excellent stability and has for its object to provide the image display device which can make a display area larger and achieve a simple handling of the particles during the manufacturing.

According to the first embodiment of the fifth aspect of the invention, an image display device which comprises an image display panel, in which two or more groups of particles having different colors and different characteristics are sealed between opposed one substrate, at least one of two substrates being transparent, and, in which the particles, to which an electrostatic field produced by two groups of electrodes having different potentials is applied, are made to move so as to display an image, is characterized in that one or more image display elements are formed by using a partition wall and the partition wall has such a shape that a bottom width wb at a side of an opposed substrate is larger than a top width wt at a side of a transparent substrate.

In the first embodiment of the fifth aspect of the invention, since the partition wall has such a shape that the bottom width wb at a side of the opposed substrate is larger than the top width wt at a side of the transparent substrate, it is possible to decrease a portion of the partition wall to which the transparent substrate is contacted and to increase a display area. In addition, when the particles are filled in the image display elements each surrounded by the partition wall, it is possible to decrease the particles remained on the head portion of the partition wall and to achieve the simple handling of the particles during the manufacturing.

In the first embodiment of the fifth aspect of the invention, it is preferred that a ratio wt/wb between the bottom width wb at a side of the opposed substrate and the top width wt at a side of the transparent substrate is not greater than 0.5. Moreover, it is preferred that an average particle diameter of the particles is 0.1 - 50 μm. Further, it is preferred that the difference of a surface charge density in an absolute value between two groups of the particles measured by using the same kind of carrier in accordance with a blow-off method is 5 - 150 μC/m². Furthermore, it is preferred that the particles are particles in which the maximum surface potential, in the case that the surface of particles is charged by a generation of Corona discharge caused by applying a voltage of 8 KV to a Corona discharge device deployed at a distance of 1 mm from the surface of the particles, is greater than 300 V at 0.3 second after the Corona discharge. Moreover, it is preferred that a color of the particles is white or black. In each preferred case, it is possible to obtain the image display device according to the invention more preferably.

A second embodiment of a fifth aspect of the invention has for its object to eliminate the drawbacks mentioned above and to provide an image display device having rapid response, simple construction, inexpensive cost and excellent stability, which can further achieve a larger display area and a simple handling of the liquid powders during the manufacturing.

According to the second embodiment of the fifth aspect of the invention, an image display device which comprises an image display panel, in which liquid powders, which indicate a high fluidity in an aerosol state such hat solid-like substances are suspended in a gas stably as dispersoid, are sealed between opposed two substrates, at least one of two substrates being transparent, and, in which the liquid powders, to which an electrostatic field produced by a pair of electrodes having different potentials is applied, are made to move so as to display an image, is characterized in that one or more image display elements are formed by using a partition wall and the partition wall has such a shape that a bottom width wb at a side of an opposed substrate is larger than a top width wt at a side of a transparent substrate.

In the second embodiment of the fifth aspect of the invention, since the partition wall has such a shape that the bottom width wb at a side of the opposed substrate is larger than the top width wt at a side of the transparent substrate, it is possible to decrease a portion of the partition wall to which the transparent substrate is contacted and to increase a display area. In addition, when the liquid powders are filled in the image display elements each surrounded by the partition wall, it is possible to decrease the liquid powders remained on the head portion of the partition wall and to achieve the simple handling of the liquid powders during the manufacturing.

In the second embodiment of the fifth aspect of the invention, it is preferred that a ratio wt/wb between the bottom width wb at a side of the opposed substrate and the top width wt at a side of the transparent substrate is not greater than 0.5. Moreover, it is preferred that an apparent volume in a maximum floating state of the liquid powders is two times or more than that in none floating state. Further, it is preferred that a time change of the apparent volume of the liquid powders satisfies the following formula:

$$V_{10}/V_5 > 0.8;$$

here, $V_5$ indicates the apparent volume (cm³) of the liquid powders after 5 minutes from the maximum floating state; and $V_{10}$ indicates the apparent volume (cm³) of the liquid powders after 10 minutes from the maximum floating state. Furthermore, it is preferred that an average particle diameter d(0.5) of the liquid powders is 0.1 - 20 μm. In each

preferred case, it is possible to obtain the image display device according to the invention more preferably.

A first embodiment of a sixth aspect of the invention has for its object to eliminate the drawbacks mentioned above and to provide a method of manufacturing an image display having rapid response, simple construction, inexpensive cost and excellent stability, which can maintain a larger connection strength between a partition wall and a substrate and prevent a leakage of particles.

According to the first embodiment of the sixth aspect of the invention, a method of manufacturing an image display device which comprises an image display panel, in which two or more groups of particles having different colors and different characteristics are sealed between opposed two substrates, at least one of two substrates being transparent, in which the particles, to which an electrostatic field produced by two groups of electrodes having different potentials is applied, are made to move so as to display an image, and, in which one or more image display elements are formed by using a partition wall, is characterized in that the improvement comprises the steps of: forming the partition wall on one or both of a transparent substrate and an opposed substrate; arranging an adhesive at a tip of the partition wall; and connecting the partition wall and the other substrate or both partition walls through the adhesive.

In the first embodiment of the sixth aspect of the invention, since the improvement comprises the steps of: forming the partition wall on one or both of a transparent substrate and an opposed substrate; arranging an adhesive at a tip of the partition wall; and connecting the partition wall and the other substrate or both partition walls through the adhesive, it is possible to achieve a strong connection between the partition wall and the substrate or a strong connection between the substrates and to prevent a leakage of the particles almost completely.

In the first embodiment of the sixth aspect of the invention, it is preferred that an average particle diameter of the particles is 0.1 - 50 $\mu$m. Moreover, it is preferred that the difference of a surface charge density in an absolute value between two groups of the particles measured by using the same kind of carrier in accordance with a blow-off method is 5 - 150 $\mu$C/m$^2$. Further, it is preferred that the particles are particles in which the maximum surface potential, in the case that the surface of particles is charged by a generation of Corona discharge caused by applying a voltage of 8 KV to a Corona discharge device deployed at a distance of 1 mm from the surface of the particles, is greater than 300 V at 0.3 second after the Corona discharge. Furthermore, it is preferred that a color of the particles is white or black. In each preferred case, it is possible to obtain the method of manufacturing the image display device according to the invention more preferably.

Moreover, an image display device according to the first embodiment of the sixth aspect of the invention, an image display device is characterized in that the improvement is manufactured in accordance with the method of manufacturing the image display device mentioned above.

A second embodiment of a sixth aspect of the invention has for its object to eliminate the drawbacks mentioned above and to provide a method of manufacturing an image display having rapid response, simple construction, inexpensive cost and excellent stability, which can maintain a larger connection strength between a partition wall and a substrate and prevent a leakage of liquid powders.

According to the second embodiment of the sixth aspect of the invention, a method of manufacturing an image display device which comprises an image display panel, in which liquid powders, which indicate a high fluidity in an aerosol state such that solid-like substances are suspended in a gas stably as dispersoid, are sealed between opposed two substances, at least one of two substrates being transparent, in which the liquid powders, to which an electrostatic field produced by a pair of electrodes having different potentials is applied are made to move so as to display an image, and, in which one or more image display elements are formed by using a partition wall, is characterized in that the improvement comprises the steps of: forming the partition wall on one or both of a transparent substrate and an opposed substrate; arranging an adhesive at a tip of the partition wall; and connecting the partition wall and the other substrate or both partition walls through the adhesive.

In the second embodiment of the sixth aspect of the invention, since the improvement comprises the steps of: forming the partition wall on one or both of a transparent substrate and an opposed substrate; arranging an adhesive at a tip of the partition wall; and connecting the partition wall and the other substrate or both partition walls through the adhesive, it is possible to achieve a strong connection between the partition wall and the substrate or a strong connection between the substrates and to prevent a leakage of the liquid powders almost completely.

In the second embodiment of the sixth aspect of the invention, it is preferred that an apparent volume in a maximum floating state of the liquid powders is two times or more than that in none floating state. Moreover, it is preferred that a time change of the apparent volume of the liquid powders satisfies the following formula:

$$V_{10}/V_5 > 0.8;$$

here, $V_5$ indicates the apparent volume (cm$^3$) of the liquid powders after 5 minutes from the maximum floating state; and $V_{10}$ indicates the apparent volume (cm$^3$) of the liquid powders after 10 minutes from the maximum floating state. Further, it is preferred that an average particle diameter d(0.5) of the liquid powders is 0.1 - 20 $\mu$m. In each preferred

case, it is possible to obtain the method of manufacturing the image display device according to the invention more preferably.

Moreover, an image display device according to the second embodiment of the sixth aspect of the invention, an image display device is characterized in that the improvement is manufactured in accordance with the method of manufacturing the image display device mentioned above.

In the present invention, a term "liquid powder" means an intermediate material having both of liquid properties and particle properties and exhibiting a self-fluidity without utilizing gas force and liquid force. Preferably, it is a material having an excellent fluidity such that there is no repose angle defining a fluidity of powder. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass if it is vanishingly small and receives an attraction of gravity (Maruzen Co., Ltd.: physics subject-book). Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with the gravity. In the same manner, the liquid-solid fluidized body means a state that is fluidized by a liquid. (Heibonsha Ltd.: encyclopedia) In the present invention, it is found that the intermediate material having both of fluid properties and solid properties and exhibiting a self-fluidity without utilizing gas force and liquid force can be produced specifically, and this is defined as the liquid powder.

That is, as is the same as the definition of the liquid crystal (intermediate phase between a liquid and a solid), the liquid powder according to the invention is a material showing the intermediate state having both of liquid properties and particle properties, which is extremely difficult to receive an influence of the gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the image display device according to the invention, a solid material is used as a dispersant.

BRIEF DESCRIPTION OF DRAWINGS

Fig. 1 is a schematic view explaining one embodiment of a display method of an image display panel in an image display device according to the invention.
Fig. 2 is a schematic view explaining another embodiment of the display method of the image display panel in the image display device according to the invention.
Fig. 3 is a schematic view explaining one embodiment of a structure of the image display panel in the image display device according to the invention.
Fig. 4 is a schematic view explaining still another embodiment of the display method in the image display device according to the invention.
Fig. 5 is a schematic view explaining still another embodiment of the display method in the image display device according to the invention.
Fig. 6 is a schematic view explaining another embodiment of the structure in the image display device according to the invention.
Figs. 7a - 7c are schematic views respectively showing one embodiment in an image display element of the image display panel constituting the image display device according to the invention and its display driving theory.
Fig. 8 is a schematic view illustrating another embodiment of the structure in the image display element of the image display panel constituting the image display device according to the invention.
Fig. 9 is a schematic view depicting one embodiment of a shape of partition walls in the image display device according to the invention.
Fig. 10 is a schematic view showing a method of measuring a surface potential of a particle used in the image display device according to the invention.
Fig. 11 is a graph explaining a relation between an applied voltage and a reflection density in an estimation of a display function of the image display device according to the invention.
Fig. 12 is a graph illustrating an optical performance of an anti-reflection layer formed in the embodiment.
Figs. 13a - 13c are schematic views respectively depicting a step of connecting the substrates in the image display device according to the invention.
Figs. 14a - 14c are schematic views respectively showing another embodiment of the image display element in the image display device according to the invention.
Figs. 15a and 15b are longitudinal cross sectional views respectively illustrating one embodiment of a shape of the partition wall used in the image display device according to the invention.

Fig. 16 is a schematic view explaining a case such that a display electrode is arranged on a transparent substrate and an opposed electrode is arranged on an opposed substrate, as another embodiment of the display element in the image display device according to the invention.

Fig. 17 is a schematic view explaining another method of forming the partition wall in the image display device according to the invention.

Fig. 18 is a schematic view explaining another method of forming the partition wall in the image display device according to the invention.

Fig. 19 is a schematic view explaining one method of forming the partition wall inn the image display device according to the invention.

Fig. 20 is a schematic view showing one method of manufacturing the partition wall constituting the image display element in a method of manufacturing the image display device according to the invention.

Fig.22 is a schematic view explaining one method of forming the partition wall according to the invention.

Fig. 23 is a schematic view explaining another method of forming the partition wall according to the invention.

Fig. 24 is a schematic view explaining one method of forming the partition wall according to a comparative example.


BEST MODE FOR CARRYING OUT THE INVENTION

At first, various constructions of an image display device according to the invention will be explained. In the following explanations, it should be noted that there are a first embodiment and a second embodiment in first aspect to sixth aspect of the invention respectively and that the first embodiment shows an example of particles and the second embodiment illustrates an example of liquid powders.

In the first embodiment wherein the particles are utilized in an image display panel of the image display device according to the invention, one or more groups of particles 5, 6 are sealed between a transparent substrate 1 and an opposed substrate 2, and an electrostatic field is applied from two groups of electrodes 3, 4 having a different potential to the particles 5, 6 so as to move the particles 5, 6 so that an image is displayed.

As to forces applied to the particles, there are an attraction force between the particles due to Coulomb' force, an imaging force with respect to the electrode panel, an intermolecular force, a liquid bridging force and a gravity.

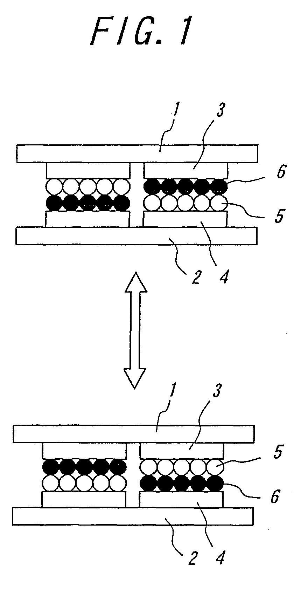

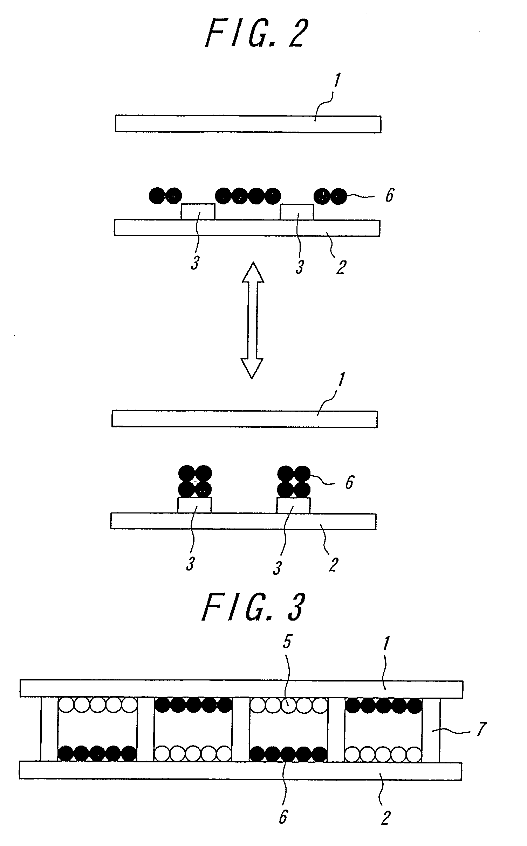

The image display can be applied to a display method wherein two or more kinds of particles having different colors are moved in a vertical direction with respect to the substrate as shown in Fig. 1 and also to a display method wherein one kind of particles having one color are moved in a parallel direction with respect to the substrate as shown in Fig. 2. From the viewpoint of stability, it is preferred that the image display device of this embodiment is applied to the former display method.

Fig. 3 is a schematic view explaining a construction of the image display device according to the first embodiment in respective aspects of the invention. It is constructed by opposed substrates 1, 2, particles 5, 6 and a partition wall 7 according to need.

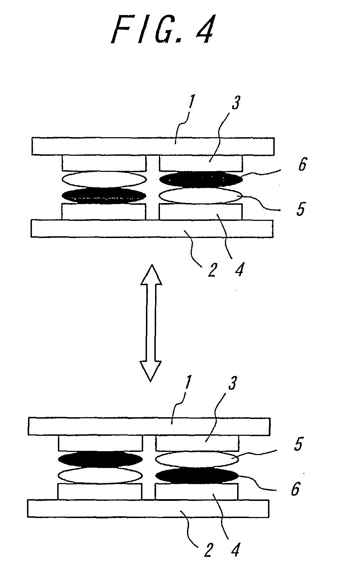

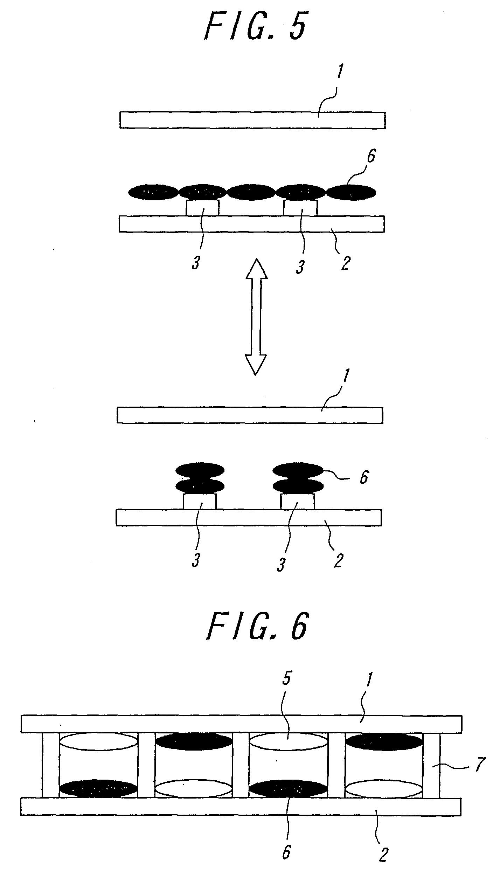

Also in the second embodiment wherein the liquid powders for the image display are utilized in the image display device according to the invention, as is the same as the first embodiment utilizing the particles, the image display can be applied to a display method wherein two or more kinds of liquid powders having different colors are moved in a vertical direction with respect to the substrate as shown in Fig. 4 and also to a display method wherein one kind of liquid powders having one color are moved in a parallel direction with respect to the substrate as shown in Fig. 5. From the viewpoint of stability, it is preferred that the image display device of this embodiment is applied to the former display method.

Fig. 6 is a schematic view explaining a construction of the image display device according to the second embodiment in respective aspects of the invention. It is constructed by opposed substrates 1, 2, liquid powders 5, 6 arranged between the substrates and a partition wall 7 according to need.

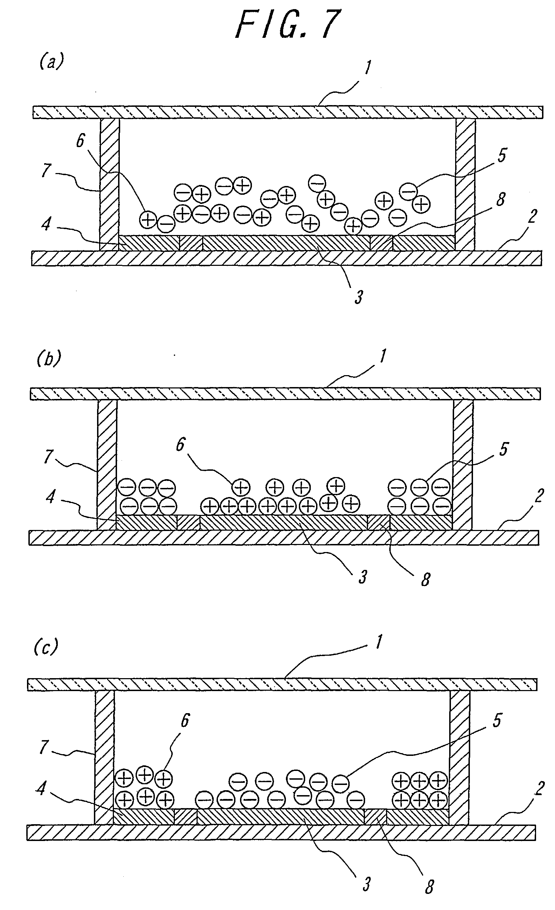

Figs. 7a to 7c are schematic views respectively showing another embodiments of the image display element of the image display panel used for the image display device according to the invention and its display driving method. In the embodiments shown in Figs. 7a to 7c, numeral 1 is a transparent substrate, numeral 2 is an opposed substrate, numeral 3 is a display electrode, numeral 4 is an opposed electrode, numeral 5 is a negatively chargeable particle, numeral 6 is a positively chargeable particle, numeral 7 is a partition wall and numeral 8 is an insulation member.

Fig. 7a shows a state such that the negatively chargeable particles 5 and the positively chargeable particles 6 are arranged between opposed substrates (transparent substrate 1 and opposed substrate 2). Under such a state, when a voltage is applied in such a manner that a side of the display electrode 3 becomes low potential and a side of the opposed electrode 4 becomes high potential, as shown in Fig. 7b, the positively chargeable particles 6 move to the side of the display electrode 3 and the negatively chargeable particles 5 move to the side of the opposed electrode 4 by means of Coulomb's force. In this case, a display face viewed from a side of the transparent substrate 1 looks like a color of the positively chargeable particles 6. Next, when a voltage is applied in such a manner that the side of the display electrode 3 becomes high potential and the side of the opposed electrode 4 becomes low potential by reversing potentials, as shown in Fig. 7c, the negatively chargeable particles 5 move to the side of the display electrode 3 and the positively chargeable particles 6 move to the side of the opposed electrode 4 by means of Coulomb's force. In this case, the display face viewed from the side of the transparent substrate 1 looks like a color of the negatively chargeable particles 5.

The display states shown in Figs. 7b and 7c are repeatedly changeable only by reversing the potentials of a power source, and thus it is possible to change colors on the display face reversibly by reversing the potentials of the power source as mentioned above. The colors of the particles can be arbitrarily selected. For example, when the negatively chargeable particles 5 are white color and the positively chargeable particles 6 are black color, or, when the negatively chargeable particles 5 are black color and the positively chargeable particles 5 are white color, a reversible image display between white color and black color can be performed. In this method, since the particles are once adhered to the electrode by means of an imaging force, a display image can be maintained for a long time after a voltage apply is stopped, thereby showing an excellent memory property.

In the present invention, since the chargeable particles fly and move in the gas, the response rate of the image display is extremely fast and the response rate of shorter than 1 msec may be possible. Moreover, it is not necessary to use an orientation film and a polarizing plate as the liquid crystal display, and thus it is possible to make the structure simple and to realize the image display device having a large display area at a lower cost. In addition, it is stable with respect to a temperature variation and can be used in a wide temperature range from a low temperature to a high temperature. Further, it is not affected by an angle of visual field and has a high reflection coefficient. Therefore, it is easily viewable and has low electric power consumption. Furthermore, it has an excellent memory property and thus it is not necessary to use an electric power when the image is to be maintained.

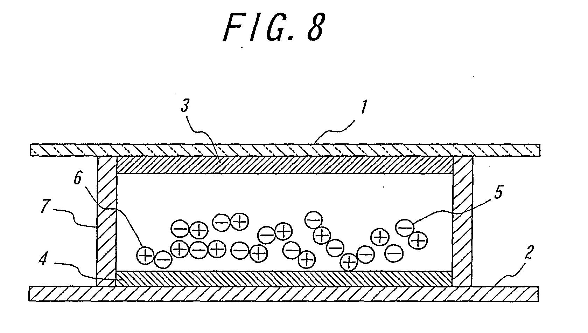

Fig. 8 is a schematic view showing still another embodiment of the image display element of the image display panel according to the invention. In the embodiment shown in Fig. 8, irrespective of the embodiments shown in Figs. 7a to 7c, the display electrode 3 is arranged to the transparent substrate 1 and the opposed electrode 4 is arranged to the opposed substrate 2. In the embodiment shown in Fig. 8, it is necessary to use a transparent electrode as the display electrode 3. On the other hand, in the embodiments shown in Figs. 7a to 7c, since an opaque electrode can be used as the display electrode 3, it is possible to use a metal electrode having an inexpensive cost and a low resistance such as copper, aluminum and so on, and thus it is preferred.

It should be noted that, in the embodiments shown in Figs. 7a - 7c and 8, the explanation is made to a case utilizing the particles, but the same explanation can be applied to a case utilizing the liquid powders.

Hereinafter, the substrate, the electrode and the partition wall among members constituting the image display device according to the invention will be explained.

With respect to the substrate, at least one of the substrates is the transparent substrate 1 through which a color of the particles can be observed from outside of the device, and it is preferred to use a material having a high transmission factor of visible light and an excellent heat resistance. The opposed substrate 2 may be transparent or may be opaque. Whether a flexibility of the substrate is necessary or not is suitably selected in accordance with its use. For example, it is preferred to use a material having flexibility for the use of electronic paper and so on, and it is preferred to use a material having no flexibility for the use of a display of portable device such as mobile phone, PDA, laptop computer and so on. Examples of the substrate material include polymer sheets such as polyethylene terephthalate, polymer sulfone, polyethylene, polycarbonate, polyimide or acryl and inorganic sheets such as glass, quartz or so. The thickness of the substrate is preferably 2 to 5000 $\mu$m, more preferably 5 to 1000 $\mu$m. When the thickness is too thin, it becomes difficult to maintain strength and distance uniformity between the substrates, and when the thickness is too thick, vividness and contrast as a display capability degrade, and in particular, flexibility in the case of using for an electronic paper deteriorates.

In the image display device according to the invention, an electrode may be arranged on the substrate according to need.

In the case of arranging no electrode on the substrate, the particles or the liquid powder charged in a predetermined potential and having a color is pulled in or rebounds with respect to the substrate by means of an electric field generated by applying an electrostatic latent image on an outer surface of the substrate. Then, the particles or the liquid powder aligned in accordance with the electrostatic latent image is observed from outside of the display device through the transparent substrate. In this case, the electrostatic latent image mentioned above can be generated for example by a method wherein an electrostatic latent image generated in a known electrophotography system using an electrophotography photo-conductor is transferred and formed on the substrate of the image display device according to the invention, or, by a method wherein an electrostatic latent image is directly formed on the substrate by an ion flow.

In the case of arranging an electrode on the substrate, the particles or the liquid powder charged in a predetermined characteristic and having a color is pulled in or rebounds with respect to the substrate by means of an electric field generated on respective electrodes formed on the substrate by applying an outer voltage thereto. Then, the particles or the liquid powder aligned in accordance with the electrostatic latent image is observed from outside of the display device through the transparent substrate.

In this case, the electrode may be formed of electroconductive materials which are transparent and having patter formation capability. Additionally, the thickness of the electrode may be suitable unless the electroconductivity is absent or any hindrance exists in optical transparency, and it is preferable to be 3 to 1000 nm, more preferable to be 5 to 400 nm. In this case, the applied outer voltage may be superimposed with a direct current or an alternate current.

In the image display device according to the invention, it is preferred to arrange the partition wall 7 shown in respective figures at a periphery of respective display elements. The partition wall may be arranged only in a parallel direction. In this manner, it is possible to prevent an unnecessary movement of the particles in a direction parallel to the substrate, to help a repeatedly endurance property and a memory maintaining property and to improve a strength of the image display panel by making a distance between the substrates even and strong. That is, in the image display device according to the invention, in order to prevent an unnecessary movement of the liquid powder in a direction parallel to the substrate, it is preferred to form a partition wall bridging the opposed substrates and to construct the display portion by a plurality of display cells.

A shape of the partition wall is suitably designed in accordance with a size of the particles or the liquid powder to be used for the display and is not restricted. However, it is preferred to set a width of the partition wall to 1 - 100 μm more preferably 2 - 50 μm and to set a height of the partition wall to 10 - 5000 μm more preferably 10 - 500 μm.

Moreover, as a method of forming the partition wall, use may be made of a double rib method wherein ribs are formed on the opposed substrates respectively and they are connected with each other and a single rib method wherein a rib is formed on one of the opposed substrates only. In the image display device according to the invention, in order to prevent a connection deviation, it is preferred to use the single rib method for the partition wall formation.

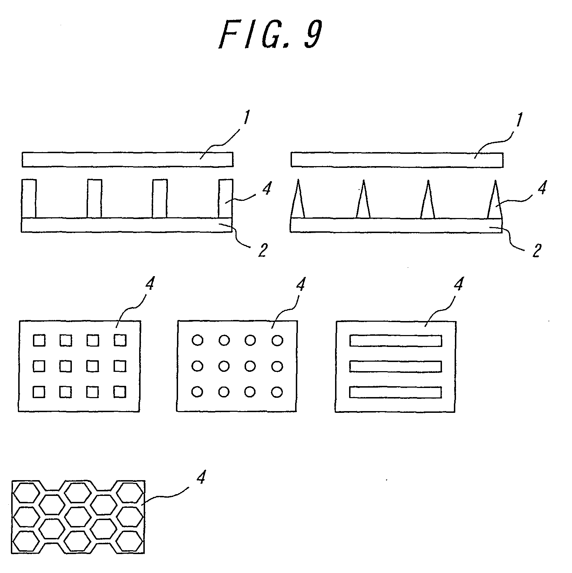

The display cell formed by the partition walls each made of rib has a square shape, a triangular shape, a line shape, a circular shape, a hexagon shape (honeycomb structure) as shown in Fig. 9 viewed from a plane surface of the substrate.

It is better to minimize a portion (area of frame portion of the display cell) corresponding to a cross section of the partition walls viewed from the display side. In this case, it is possible to improve a clearness of the image display. The formation method of the partition wall 7 is not particularly restricted, however, a screen printing method wherein pastes are overlapped by coating repeatedly on a predetermined position by screen plate; a sandblast method wherein partition materials are painted with a desired thickness entirely over the substrate and then after coating resist pattern on the partition materials which is wanted to be left as a partition, jetting abrasive to cut and remove partition materials aside from the partition part; lift-off method (additive method) wherein a resist pattern is formed on the substrate using photosensitive polymer, and then after burying paste into a resist recess, removing the resist; photosensitive paste method wherein the photosensitive resin composition containing the partition materials is applied over the substrate and then obtaining a desired pattern by exposure & developing; and mold formation method wherein paste containing the partition materials is applied over the substrate and then forming a partition by compression bonding & pressure forming the dies having rugged structure; and so on are adopted. Further, modifying the mold formation method, relief embossing method wherein a relief pattern provided by a photosensitive polymer composition is used as a mold is also adopted.

Then, the particles used in the first embodiment of respective aspects of the invention will be explained.

As the particles used in the first embodiment of the image display device according to the invention, although any of colored particles negatively or positively chargeable having capability of flying and moving by Coulomb's force are employable, spherical particles with light specific gravity are particularly preferable. The average particle diameter is preferable to be 0.1 to 50 μm, particularly to be 1 to 30 μm. When the particle diameter is less than this range, charge density of the particles will be so large that an imaging force to an electrode and a substrate becomes too strong; resulting in poor following ability at the inversion of its electric field, although the memory characteristic is favorable. On the contrary, when the particle diameter exceeds the range, the following ability is favorable, however, the memory characteristic will degrade.

Although the method for charging the particles negatively or positively is not particularly limited, a corona discharge method, an electrode injection-charge method, a friction charge method and so on are employable.

A charge amount of the particles is depend on the measuring condition, i.e., the charge amount of the particles in the image display device is depend on its initial charge amount, a contact with the substrate, a contact between the particles having different kinds, and a charge decrease due to a lapse of time. Particularly, it is understood that a main factor is "the contact between the particles having different kinds", i.e., a saturated value of a charge behavior due to the contact between two particles. Therefore, it is important to know a difference of the charge characteristics between two particles on the charge amount, i.e., to know a difference of a work function. However, it is difficult to know these differences by an easy measurement.

The inventors investigated theses differences and find that it is possible to estimate these differences relatively by using same carriers and measuring the charge amount of respective particles by means of a blow-off method.

**EP 1 536 271 A1**

Moreover, if the measuring results are defined by a surface charge density, it is possible to perform an estimation of the charge amount of the particles as a suitable method for the image display device.

The measuring method will be explained later in detail. By performing the blow-off method, it is possible to contact the particles and the carrier particles sufficiently and to measure the charge amount per unit weight of respective particles by measuring its saturated charge amount. Then, it is possible to calculate the surface charge density of respective particles by obtaining a particle diameter and a specific gravity of respective particles separately.

In the image display device, since a particle diameter of the particles to be used is small and an affection of gravity is too small to neglect its affection, the specific gravity is not affected to the movement of the particles. However, on the charge amount of the particles, if the particles have a same particle diameter and a same average charge amount per unit weight, the maintained charge amounts are different by two times in the case that the specific gravities of the particles are different by two times. Therefore, it is understood that it is preferred to estimate the charge characteristics of the particles used in the image display device by the surface charge density (unit: $\mu C/m^2$) which is irrelevant to the specific gravity of the particles.

Then, when the difference of this surface charge density is sufficiently large between the particles, two groups of the particles maintain the charge amounts of different characteristics by contacting them with each pother and a function of the movement by an electrostatic field is also maintained.

Here, it is necessary to obtain some degree of difference on the surface charge density so as to differentiate the charge characteristics of the two particles, but it is not always necessary to make the difference on the surface charge density larger. In the image display device utilizing the particle movement, when a particle diameter of the particles is large, the main factor for determining a fly/move electrostatic field (voltage) of the particles is an electric imaging force. Therefore, in order to move the particles by a low electrostatic field (voltage), it is preferred to make the charge amount low. Moreover, when a particle diameter of the particles is small, the main factor for determining the fly/move electrostatic field (voltage) is a non-electric force such as an intermolecular force, a liquid bridging force and so on. Therefore, in order to move the particles by a low electrostatic field (voltage), it is preferred to make the charge amount high. However, since theses phenomena are largely depend on surface properties (material, shape) of the particles, it is not possible to define only by the particle diameter and the charge amount.

The inventors find that, in the particles having an average particle diameter of 0.1 - 50 $\mu$m, when the absolute value of the difference between the surface charge densities of two groups of particles, which are measured by the blow-off method using the same kind of particles, is 5 - 150 $\mu C/m^2$, it is possible to obtain the particles usable for the image display device.

Measuring theory and method of the blow-off method are as follows. In the blow-off method, a mixture of the particles and the carriers are placed into a cylindrical container with nets at both ends, and high-pressure gas is blown from the one end to separate the particles and the carriers, and then only the particles are blown off from the mesh of the net. In this occasion, charge amount of reverse blown polarity remains on the carriers with the same charge amount of the particles carried away out of the container. Then, all of electric flux by this electric charge are collected to Faraday cage, and are charged across a capacitor with this amount. Accordingly, the charge amount of the particles is determined as Q=CV (C: capacity, V: voltage across both ends of the capacitor) by measuring potential of both ends of the capacitor.

In the invention, as a blow-off powder charge amount measuring instrument, TB-200 produced by Toshiba Chemical Co., Ltd. was used, and F963-2535 available from Powder TEC Co., Ltd. was employed as the same kind of carriers. Then, the charge density per unit surface area (unit: $\mu C/m^2$) was measured.

Because it is necessary for the particles to hold the charged electric charge, insulating particles with the volume specific resistance of $1\times10^{10}$ $\Omega\cdot$cm or greater are preferable, and in particular, insulating particles with the volume specific resistance of $1\times10^{12}$ $\Omega\cdot$cm or greater are more preferable.

Further, the particles with slow charge attenuation property evaluated by the measuring method below are more preferable. That is, the particles are made into a film having a thickness of 5 - 100 $\mu$m by means of a press method, a heating/melting method, a casting method and so on, and the voltage of 8 kV is applied to a Corona generator disposed with a distance of 1 mm to the film surface so as to generate Corona discharge, which charges the film surface. Then, the change of the surface potential is measured to determine the suitability. In this occasion, it is preferable to select the material whose maximum surface potential will be 300 V or greater after 0.3 seconds, more preferable to select the material whose maximum surface potential will be 400 V or greater after 0.3 second as the material for composing the particles.

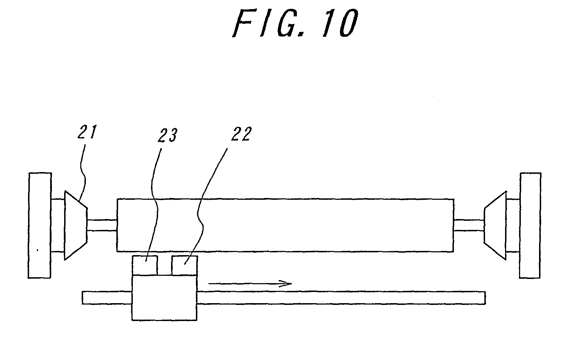

Additionally, the foregoing surface potential is measured by means of an instrument (CRT2000 produced by QEA Inc.) as shown in Fig. 10. In this instrument both end portions of a roll shaft being held with chuck 21, compact scorotron discharger 22 and surface potential meter 23 are spaced with predetermined interval to form a measurement unit. Facedly deploying the measurement unit with a distance of 1 mm from the surface of the particles, and by moving the measurement unit from one end portion of the roll shaft to the other end portion with an uniform speed, with the state that the roll shaft remains stopping and while giving surface charge, a method of measuring its surface potential is preferably adopted. Moreover, measurement environment should be settled at the temperature of $25 \pm 3°C$ and the humidity of $55 \pm 5\%$ RH.

If the particles satisfy electrostatic property and so on, the particles may be formed by any materials. For example, it is formed by resin, charge control agent, coloring agent, inorganic additive and so on, or, by coloring agent and so on only. Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable. Two kinds or more of these may be mixed and used.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable.

Examples of black pigments include carbon black, copper oxide, manganese dioxide, aniline black, and activate carbon.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, and tartrazinelake.

Examples of orange pigments include red chrome yellow, molybdenum orange, permanent orange GTR, pyrazolone orange, Balkan orange, indusren brilliant orange RK, benzidine orange G, and Indusren brilliant orange GK.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, and brilliant carmine 3B.

Examples of purple pigments include manganese purple, first violet B, and methyl violet lake.

Examples of blue pigments include Berlin blue, cobalt blue, alkali blue lake, Victoria blue lake, phthalocyanine blue, metal-free phthalocyanine blue, partially chlorinated phthalocyanine blue, first sky blue, and Indusren blue BC.

Examples of green pigments include chrome green, chromium oxide, pigment green B, Malachite green lake, and final yellow green G.

Further, examples of white pigments include zinc white, titanium oxide, antimony white, and zinc sulphide.

Examples of extenders include baryta powder, barium carbonate, clay, silica, white carbon, talc, and alumina white.

Furthermore, there are Nigrosine, Methylene Blue, rose bengal, quinoline yellow, and ultramarine blue as various dyes such as basic dye, acidic dye, dispersion dye, direct dye, etc.

These coloring agents may be used alone or in combination of two or more kinds thereof.

Particularly, carbon black is preferable as the black coloring agent, and titanium oxide is preferable as the white coloring agent.

Although the manufacturing method of the particles is not specifically restricted, mixing/grinding method or polymerization method for producing toner of electrophotography is, for example, similarly employable. Further the method of coating resin or charge control agent and so on over the surface of powders such as inorganic or organic pigments is also employable.

The distance between the transparent substrate 1 and the opposed substrate 2 is suitably adjusted in a manner where the particles can move and maintain the contrast of image display; however, it is adjusted usually within 10 to 5000 µm, preferably within 30 to 500 µm.

The particle filling amount (volume occupying rate) of the particles existing in the space between the faced substrates is preferable to be 10 to 80%, more preferable to be 10 to 70%.

In the image display panel used in the image display device according to the invention, plural of the foregoing display elements are dispose in a matrix form, and images can be displayed. In the case of monochrome display, one display element makes one pixel. In the case of full color display, three kinds of display elements, i.e., one group of display elements each having color plate of R (red), G (green) and B (blue) respectively and each having particles of black composes a set of disposed elements preferably resulting in the reversible image display panel having the sets of the elements.

Then, the liquid powders utilized in the second embodiment of respective aspects of the invention will be explained.

As mentioned above, the liquid powder is an intermediate material having both of liquid properties and particle properties and exhibiting a self-fluidity without utilizing gas force and liquid force. The liquid powder becomes particularly an aerosol state, and thus, in the image display device according to the invention, it is utilized under such a condition that a solid material is floated in a gas as a dispersant in a relatively stable manner.

As the aerosol state, it is preferred that an apparent volume in a maximum floating state is two times or more than that in none floating state, more preferably 2.5 times or more than that in none floating state, and most preferably three times or more than that in none floating state. In this case, an upper limit is not defined, but it is preferred that an apparent volume is 12 times or smaller than that in none floating state.

If the apparent volume in the maximum floating state is smaller than two times, a display controlling becomes difficult. On the other hand, if the apparent volume in the maximum floating state is larger than 12 times, a handling inconvenience during a liquid powder filling operation into the device such as a particle over-scattering occurs. That is, it is measured by filling the liquid powder in a transparent closed vessel through which the liquid powder is seen; vibrating or dropping the vessel itself to obtain a maximum floating state; and measuring an apparent volume at that time from outside of the vessel. Specifically, the liquid powder having a volume 1/5 of the vessel is filled as the liquid powder in a vessel with a polypropylene cap having a diameter (inner diameter) of 6 cm and a height of 10 cm (product name I-boy® produced by As-one Co., Ltd.), the vessel is set in the vibrator, and a vibration wherein a distance of 6 cm is repeated at a speed of 3 reciprocating/sec. is performed for 3 hours. Then, the apparent volume in the maximum floating state is obtained from an apparent volume just after a vibration stop.

Moreover, in the image display device according to the invention, it is preferred that a time change of the apparent volume of the liquid powder satisfies the floating formula:

$$V_{10}/V_5 > 0.8;$$

here, $V_5$ indicates the apparent volume ($cm^3$) of the liquid powder after 5 minutes from the maximum floating state; and $V_{10}$ indicates the apparent volume ($cm^3$) of the liquid powder after 10 minutes from the maximum floating state. In this case, in the image display device according to the invention, it is preferred to set the time change $V_{10}/V_5$ of the apparent volume of the liquid powder to larger than 0.85, more preferably larger than 0.9, most preferably larger than 0.95. If the time change $V_{10}/V_5$ is not larger than 0.8, the liquid powder is substantially equal to normal particles, and thus it is not possible to maintain a high speed response and durability according to the invention.

Moreover, it is preferred that the average particle diameter d(0.5) of the particle materials constituting the liquid powder is 0.1 - 20 μm, more preferably 0.5 - 15 μm, most preferably 0.9 - 8 μm. If the average particle diameter d(0.5) is less than 0.1 μm, a display controlling becomes difficult. On the other hand, if the average particle diameter d(0.5) is larger than 20 μm, a display is possible, but opacifying power is decreased and thus a thin shape device is difficult. Here, the average particle diameter d(0.5) of the particle materials constituting the liquid powder is equal to d(0.5) in the following particle diameter distribution Span.

It is preferred that particle diameter distribution Span of the particle material constituting the liquid powder, which is defined by the following formula, is not more than 5 preferably not more than 3:

$$Span = (d(0.9) — d(0.1))/d(0.5) ;$$

here, d(0.5) means a value of the particle diameter expressed by μm wherein an amount of the particle material constituting the liquid powder having the particle diameter larger than this value is 50% and an amount of the particle material constituting the liquid powder having the particle diameter expressed by μm wherein an amount of the particle material constituting the liquid powder having a particle diameter smaller than this value is 10%, and d(0.9) means a value of the particle diameter expressed by μm wherein an amount of the particle material constituting the liquid powder having the particle diameter smaller than this value is 90%. If the particle diameter distribution Span of the particle materials constituting the liquid powder is set to not more than 5, the particle diameter becomes even and it is possible to perform an even liquid powder movement.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution. In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

The liquid powder may be formed by mixing necessary resin, charge control agent, coloring agent, additive and so on and grinding them, or, by polymerizing from monomer, or, by coating a particle with resin, charge control agent, coloring agent, and additive and so on. Hereinafter, typical examples of resin, charge control agent, coloring agent, additive and so on constituting the liquid powder will be explained.

Typical examples of the resin include urethane resin, acrylic resin, polyester resin, acryl urethane resin, silicone resin, nylon resin, epoxy resin, styrene resin, butyral resin, vinylidene chloride resin, melamine resin, phenolic resin, fluorocarbon polymers, and it is possible to combine two or more resins. For the purpose of controlling the attaching force with the substrate, acryl urethane resin, acryl urethane silicone resin, acryl urethane fluorocarbon polymers, urethane resin, fluorocarbon polymers.

Examples of the electric charge control agent include, positive charge control agent include the fourth grade ammonium salt compound, nigrosine dye, triphenylmethane compound, imidazole derivatives, and so on, and negative charge control agent such as metal containing azo dye, salicylic acid metal complex, nitroimidazole derivative and so on.

As for a coloring agent, various kinds of basic or acidic dye may be employable. Examples include Nigrosine, Methylene Blue, quinoline yellow, rose bengal and do on.

Examples of the inorganic additives include titanium oxide, Chinese white, zinc sulfide, antimonial oxide, calcium carbonate, zinc white, talc, silica, calcium silicate, alumina white, cadmium yellow, cadmium red, cadmium orange, titanium yellow, iron blue, ultramarine blue, cobalt blue, cobalt green, cobalt violet, ferric oxide, carbon black, copper powder, aluminum powder and so on.

However, if the above materials are only mixed or coated with no contrivance, the liquid powder exhibiting an aerosol state cannot be obtained. The regular method of forming the liquid powder exhibiting an aerosol state is not defined, but the following method is preferably used.

At first, inorganic fine particles having an average particle size of 20 - 100 nm preferably 20 - 80 nm are preferably fixed on a surface of materials constituting the liquid powder. Moreover, it is preferred to treat the inorganic fine particles by a silicone oil. Here, as for the inorganic fine particles, use may be made of silicon dioxide (silica), zinc oxide, aluminum oxide, magnesium oxide, cerium oxide, ferric oxide, copper oxide and so on. In this case, a method of fixing the inorganic fine particles is important. For example, use may be made of hybridizer (NARA-KIKAI Industry Co., Ltd.) or mechano-fusion (Hosokawa Micron Co., Ltd.), and the liquid powders showing an aerosol state are formed under a predetermined condition (for example processing time).

Here, in order to further improve a repeating durability, it is effective to control a stability of the resin constituting the liquid powder, especially, a water absorbing rate and a solvent insoluble rate. It is preferred that the water absorbing rate of the resin constituting the liquid powder sealed between the substrates is not more than 3 wt % especially not more than 2 wt %. In this case, a measurement of the water absorbing rate is performed according to ASTM-D570 and a measuring condition is 23°C for 24 hours. As for the solvent insoluble rate of the liquid powder, it is preferred that a solvent insoluble rate of the liquid powder, which is defined by the following formula, is not less than 50% more preferably not less than 70%:

$$\text{solvent insoluble rate (\%)} = (B/A) \times 100;$$

(here, A is a weight of the liquid powder before being immersed into the solvent and B is a weight of resin components after the liquid powder is immersed into good solvent at 25°C for 24 hours).

If the solvent insoluble rate is less than 50%, a bleed is generated on a surface of the particle material constituting the liquid powder when maintaining for a long time. In this case, it affects an adhesion power with the liquid powder and prevent a movement of the liquid powder. Therefore, there is a case such that it affects a durability of the image display. Here, as a solvent (good solvent) for measuring the solvent insoluble rate, it is preferred to use fluoroplastic such as methyl ethyl ketone and so on, polyamide resin such as methanol and so on, acrylic urethane resin such as methyl ethyl ketone, toluene and so on, melamine resin such as acetone, isopropanol and so on, silicone resin such as toluene and so on.

As for a filling amount of the liquid powder, it is preferred to control an occupied volume (volume occupied rate) of the liquid powder to 5 - 85 vol %, more preferably 10 - 65 vol %, most preferably 15 - 55 vol % of a space between the opposed substrates. Since the liquid powder exhibits an aerosol state, it is difficult to use a normal filling method for filling the liquid powder in the display device. In this case, it is preferred to use an electrostatic plating apparatus and to adhere the liquid powder to the substrate by force so as to perform an easy handling. In addition, the liquid powder may be adhered to one of the substrates or may be adhered to both of the substrates, and then the substrates are connected.

Further, in the present invention, it is important to control a gas in a gap surrounding the liquid powder between the substrates, and a suitable gas control contributes an improvement of a display stability. Specifically, it is important to control a humidity of the gap gas to not more than 60% RH at 25°C, preferably not more than 50% RH, more preferably not more than 35% RH. The above gap means a gas portion surrounding the liquid powder obtained by substituting an occupied portion of the liquid powder 5, 6, an occupied portion of the partition wall 4 and a seal portion of the device from the space between the opposed substrates 1 and 2 in Figs. 7 and 8.

A kind of the gap gas is not limited if it has the humidity mentioned above, but it is preferred to use dry air, dry nitrogen gas, dry helium gas, dry carbon dioxide gas, dry methane gas and so on. It is necessary to seal this gas in the device so as to maintain the humidity mentioned above. For example, it is important to perform the operations of filling the liquid powder and assembling the substrate under an atmosphere having a predetermined humidity and to apply a seal member and a seal method for preventing a humidity inclusion from outside of the device.

The image display device according to the invention is applicable to the image display unit for mobile equipment such as notebook personal computers, PDAs, cellular phones and so on; to the electric paper for electric book, electric newspaper and so on; to the bulletin boards such as signboards, posters, blackboards and so on; to the rewritable paper substituted for a paper of copy machine, printer and so on; and to the image display unit for electric calculator, home electric application products, auto supplies and so on.

Hereinafter, features of the first aspect to the sixth aspect of the invention will be explained in sequential order.

(As to the first aspect of the invention)

The feature of the image display device according to the first aspect of the invention is to use an anisotropic conductive film for providing a member such as an electrode for transmitting a signal, which is applied to circuits for an image display, to the substrate. As the member except the electrode for transmitting a signal, which is applied to the circuit for the image display, use is made of the IC chips and so on.

Moreover, use may be made of the anisotropic conductive film formed by scattering conductive particles in a thermosetting adhesive or a photocuring adhesive.

As the thermosetting adhesive or the photocuring adhesive, it is preferred to use a polymer including one or more groups of compounds having one of glycidyl group, acrylic group and methacrylic group. For example, us is made of: ethylene - vinyl acetate copolymer; copolymer of ethylene - vinyl acetate - acrylate monomer and/or methacrylate monomer; copolymer of ethylene - vinyl acetate - maleic acid and/or maleic anhydride; copolymer of ethylene - acrylate monomer and/or methacrylate monomer - maleic acid and/or maleic anhydride; and ionomer resin wherein a metal ion is coupled between molecules in ethylene - methacrylic acid copolymer.

The anisotropic conductive film mentioned above can be obtained by: adding organic peroxide and/or photosensitizer, silane coupling agent, and compounds including epoxy group; and performing a film formation. Therefore, it is possible to form a bridging structure during hardening and to obtain high adhesion properties, excellent durability and excellent heat resistance.

In the case that ethylene - vinyl acetate copolymer is used as the polymer mentioned above, it is preferred to control a content of vinyl acetate in the ethylene - vinyl acetate copolymer to 10 - 50 wt% more preferably 15 - 45 wt%. If the content of vinyl acetate is less than 10 wt%, it is not possible to obtain a sufficient bridging in the case of bridging and hardening at a high temperature. On the other hand, if the content of vinyl acetate exceeds 50 wt%, a softening temperature of the resin is decreased and thus it is difficult to stock it.

In the case that copolymer of ethylene - vinyl acetate - acrylate monomer and/or methacrylate monomer is used as the polymer mentioned above, it is preferred to control a content of vinyl acetate in the copolymer to 10 - 50 wt% more preferably 14 - 45 wt%. If the content of vinyl acetate is less than 10 wt%, it is not possible to obtain a sufficient bridging in the case of bridging and hardening at a high temperature. On the other hand, if the content of vinyl acetate exceeds 50 wt%, a softening temperature of the resin is decreased and thus it is difficult to stock it, so that there is a drawback on actual use. Moreover, it is preferred to control a content of acrylate monomer and/or methacrylate monomer in the copolymer to 0.01 - 10 wt% more preferably 0.05 - 5 wt%. If the content of acrylate monomer and/or methacrylate monomer is less than 0.01 wt%, an improving effect of an adhesion force is decreased. On the other hand, if the content exceeds 10 wt%, a workability is sometimes decreased.

As the usable acrylate monomer and/or methacrylate monomer, it is preferred to use a monomer selected from a group of acrylic ester monomer and methacrylic ester monomer i.e. an ester between acrylic acid or methacrylic acid and a substituent fatty acid with the carbon number of 1 - 20 particularly 1 - 18, which is not substituted or substituted by epoxy group. For example, use is made of methyl acrylate, methyl methacrylate, ethyl acrylate, ethyl methacrylate, glycidyl methacrylate and so on.

In the case that copolymer of ethylene - vinyl acetate — maleic acid and/or maleic anhydride is used as the polymer mentioned above, it is preferred to control a content of vinyl acetate in the copolymer to 10 - 50 wt% more preferably 14 - 45 wt%. If the content of vinyl acetate is less than 10 wt%, it is not possible to obtain a sufficient bridging in the case of bridging and hardening at a high temperature. On the other hand, if the content of vinyl acetate exceeds 50 wt%, a strength and a durability of the adhesive layer is extremely deteriorated. Moreover, it is preferred to control a content of maleic acid and/or maleic anhydride in the copolymer to 0.01 - 10 wt% more preferably 0.05 - 5 wt%. If the content of maleic acid and/or maleic anhydride is less than 0.01 wt%, an improving effect of an adhesion force is decreased. On the other hand, if the content exceeds 10 wt%, a workability is sometimes decreased.

In the case that copolymer of ethylene - acrylate monomer and/or methacrylate monomer - maleic acid and/or maleic anhydride is used as the polymer mentioned above, it is preferred to control a content of acrylate monomer in the copolymer to 10 - 50 wt% more preferably 14 - 45 wt%. If the content of acrylate monomer is less than 10 wt%, it is not possible to obtain a sufficient bridging in the case of bridging and hardening at a high temperature. On the other hand, if the content of acrylate monomer exceeds 50 wt%, a strength and a durability of the adhesive layer is extremely deteriorated. Moreover, it is preferred to control a content of maleic acid and/or maleic anhydride in the copolymer to 0.01 - 10 wt% more preferably 0.05 - 5 wt%. If the content of maleic acid and/or maleic anhydride is less than 0.01 wt%, an improving effect of an adhesion force is decreased. On the other hand, if the content exceeds 10 wt%, a workability is sometimes decreased. It should be noted that the same materials mentioned above are used as the acrylate monomer and/or methacrylate monomer.

In the case that ionomer resin wherein a metal ion is coupled between molecules in ethylene - methacrylic acid copolymer (hereinafter, referred to "ethylene - methacrylic acid ionomer resin") is used as the polymer mentioned above, it is preferred to control a content of methacrylic acid in the resin to 1 - 30 wt% more preferably 5 - 25 wt%. If the content of methacrylic acid is less than 1 wt%, an ion bridging effect is decreased and thus an adhesion force is decreased. On the other hand, if the content exceeds 30 wt%, an extreme deterioration of workability sometimes occurs.

As the metal ion used in the ethylene - methacrylic acid ionomer resin, use may be made of a metal cation such as sodium, zinc, magnesium, lithium and so on. Moreover, an ionization degree of metal ion is preferably 5 - 80 % more preferably 7 - 70 %. If the ionization degree is less than 5 %, a transparency is extremely deteriorated. If the ionization degree exceeds 80 %, an extreme deterioration of workability sometimes occurs.

In order to harden the anisotropic conductive film, it is possible to use organic peroxide and/or photosensitizer. In the case that a hardening adhesive is the thermosetting adhesive, use is made of the organic peroxide normally. In the case that the hardening adhesive is the photocuring adhesive, use is made of the photosensitizer normally.

As the organic peroxide added for hardening the anisotropic conductive film, any organic peroxide in which radical is generated by dissolving at a temperature over 70 °C. Particularly, it is preferred to used the organic peroxide in which a dissolving temperature at a half life period of 10 hours is over 50 °C. It is selected on the ground of film formation temperature, preparing condition, hardening (bonding) temperature, heat resistance of a member to which the film is connected, and storage stability.

As usable organic peroxide, 2,5-dimethlhexane-2,5-dihydroperoxide; 2,5-dimethyl-2,5,-di(t-butylperoxy)hexene-3; di-t-butylperoxide; t-butylcumylperoxide; 2,5-dimethyl-2,5-di(t-butylperoxide)hexane; $\alpha,\alpha'$-bis(t-butylperoxyisopropyl)benzene; n-butyl-4,4'-bis(t-butylperoxy)valerate; 1,1-bis(t-butylperoxy)cyclohexane; 1,1-bis(t-butylperoxy)-3,3,5-trimethylcyclohexane; t-butylperoxybenzoate; benzoylperoxide; t-butylperoxyacetate; methylethylketoneperoxide; 2,5-dimethylhexyl-2,5-bisperoxybenzoate; butylhydroperoxide; p-menthanehydroperoxide; p-chlorobenzoylperoxide; hydroxyheptylperoxide; chlorohexanoneperoxide; oktanoilperoxide; decanoilperoxide; lauroylperoxide; cumylperoxyoctoate; succinicacidperoxide; acetylperoxide; t-butylperoxy(2-ethylhexanoate); m-toluoylperoxide; benzoylperoxide; 5-butylperoxyisobutylate; 2,4-dichlorobenzoylperoxide.

As the organic peroxide, at least one of the above listed peroxides or its compounds are used. Normally, 0.1 - 10 parts by weight of the organic peroxide is added with respect to 100 parts by weight of the polymer mentioned above.

As the photosensitizer (photo polymerization initiator) added for hardening the anisotropic conductive film, radical photo polymerization initiator is preferably used. As an hydrogen pull-out initiator among the radical photo polymerization initiators, use is made of benzophenone; o-benzoilmethylbenzonate; 4-benzoil-4'-methyldiphenylsulfide; isopropylthioxanthene; diethylthioxanthene; 4-(diethylamino)ethylbenzoate. Moreover, as an intermolecular splitting initiator among the radical photo polymerization initiators, use is made of benzoilether; benzoilpropylether; benzildimethylketal; $\alpha$-hydroalkylphenon type such as 2-hydroxy-2-methyl-1-phenylpropane-1-on; $\alpha$-aminoalkylphenon type such as 2-methyl-1-[4-(methylthio)phenyl]-2-morpholinopropanone-1,2-benzil-2-dimethyl amino- 1 -(4-morpholinophenyl)butane- 1; acrylphosphineoxide and so on. As the photosensitizer, at least one of the above listed radical photo polymerization initiators or its compounds are used. Normally, 0.1 - 10 parts by weight of the radical photo polymerization initiator is added with respect to 100 parts by weight of the polymer mentioned above.

As the silane coupling agent added for promoting the adhesion of the anisotropic conductive film, use is made of one material or a compound made of two or more materials selected from a group of vinyltriethoxysilane; vinyltris(β-methoxyethoxy)silane; γ-methacrylicroxypropyltrimetoxysilane; vinyltriacetoxysilane; γ-glycydoxypropyltriethoxysilane; γ-glycydoxypropyltriethoxysilane; β-(3,4-epoxycyclohexyl)ethyltrimethoxysilane; vinyltrichlorosilane; γ-mercaptopropyltrimethoxysilane; γ-aminopropyltrimethoxysilane; γ-aminopropyltriethoxysilane, N-β-(aminoethyl)-aminopropyltrimethoxysilane. An amount of the silane coupling agent is normally 0.01 -5 parts by weight with respect to 100 parts by weight of the polymer mentioned above.

As the compound including epoxy group added for promoting the adhesion of the anisotropic conductive film, use is made of triglycidyltris(2-hydroxyethyl)isocyanurate; neopentylglycoldiglycidylether; 1,6-hexanedioldiglycidylether; acrylglycidylether; 2-ethylhexylglycidylether; phenylglycidylether; phenol(EO)5glycidylether; p-t-butylphenylglycidylether; adipicaciddiglycidylether: phthalicaciddiglycidylether; glycidylmethacrylate; butylglycidylether. Moreover, the same effect can be obtained by alloying the polymer including epoxy group. The compound including epoxy group is used by itself or as a mixture of two or more kinds of the above compounds, and its amount is normally 0.1 - 20 parts by weight with respect to 100 parts by weight of the polymer mentioned above.

In order to improve or control physical properties of the anisotropic conductive film (mechanical strength, adhesion property, optical property, heat resistance, humidity resistance, weather resistance, bridging rate and so on), it is possible to add a compound having acrylyl group, methacrylyl group or allyl group. As the compound used for this purpose, use is normally made of derivatives of acrylic acid or methacrylic acid such as its ester or its amide, wherein, as an ester residue, there are alkali group such as methyl, ethyl, dodecyl, stearyl, lauryl; cyclohexyl group; tetrahydro furfuryl group; amino ethyl group; 2-hydroxy ethyl group; 3-hydroxy propyl group; 3-chloro-2-hydroxy propyl group. Moreover, ester with multifunctional alcohol such as ethylene glycol, triethylene glycol, polypropylene glycol, polyethylene glycol, trimethylolpropane, pentaerythritol can be used in the same manner. Further, as amid, diacetone acrylamide is used typically. As multifunctional bridging agents, use is made of ester of acrylic acid or methacrylic acid such as trimethylolpropane, pentaerythritol, glycerin. Furthermore, as the compound including allyl group, use is made of triarylcyanulate, triarylisocyanulate, diallyl phthalate, diallyl isophthalate, diallyl maleate.

These compounds are used by itself or as a mixture of two or more kinds, and its amount is normally 0.1 - 50 parts by weight preferably 0.5 - 30 parts by weight with respect to 100 parts by weight of the polymer mentioned above.

In the anisotropic conductive film, it is possible to add hydrocarbon resin to adhesives for the purpose of improving workability such as an adhesion operation. In this case, as the hydrocarbon resin to be added, use may be made of natural resin and synthetic resin. As the natural resin, use may be made of rosin, rosin derivative, terpene base resin. As the rosin, use is made of gum base resin, tall oil base resin, wood base resin. As the rosin derivative, use may be made of materials obtained by subjecting rosin to a hydrogenation, a nonuniformity treatment, a polymerization treatment, an esterufication and a metallization. As the terpene base resin, use may be made of the terpene base resin such as α-pinene, β-pinene and also terpene phenol resin. Moreover, as the other natural resins, use may be made of dammar, copal, shellac. On the other hand, as the synthetic resin, petroleum base resin, phenol base resin, xylene base resin are preferably used. As the petroleum base resin, use may be made of aliphatic petroleum resin, aromatic petroleum resin, copolymerization petroleum resin, pure-monomer petroleum resin, coumarone-indene resin. As the phenol base resin, use may be made of alkylphenol resin, denaturized phenol resin. As the xylene base resin, use may be made of xylene resin, denaturalized xylene resin.

An amount of hydrocarbon resin is suitably selected, but it is preferred to control the amount of hydrocarbon resin to 1 - 200 parts by weight more preferably 5 - 150 parts by weight with respect to 100 parts by weight of the polymer mentioned above. Other than the above mentioned additives, use may be made of antioxidant, ultraviolet absorption agent, dye, processing aid to an extent not obstructing the main purpose.

As the conductive particles used in the anisotropic conductive film, use may be made of various kinds of materials if they show an excellent electric conductivity. For example, use may be made of a metal powder made of copper, silver nickel and so on and a resin powder or a ceramic powder whose surface is coated by the metal mentioned above. Moreover, its shape is not particularly limited, and thus arbitrary shape such as squamation shape, arborized shape, granular shape, pellet shape may be utilized.

An amount of the conductive particles is preferably 0.1 - 15 vol % with respect to the polymer mentioned above. Moreover, a particle diameter of the conductive particles is preferably 0.1 - 100 μm more preferably 0.1 - 20 μm. If the amount and the particle diameter are defined in this manner, the conductive particles are not agglutinated between adjacent circuits and thus a short circuit does not occur.

The anisotropic conductive film is manufactured by adding a bridging agent (organic peroxide and/or photosensitizer) which generates radical by applying heat or light as mentioned above, a bridging auxiliary agent according to need, a silane coupling agent, compound including epoxy base substance into the polymer mentioned above. That is, the anisotropic conductive film can be manufactured by: mixing evenly the polymer mentioned above with the additives mentioned above to obtain a mixture; kneading the mixture by means of an extruder, a roll and so on to obtain a formed body; and subjecting the formed body to a calendar roll, a T-die extrusion, an inflation so as to obtain the film having a predetermined shape.

In the case of the above film manufacturing, it is possible to perform an embossing so as to prevent a blocking and make a pressurized connection with an adherend easy. In order to bond the thus obtained film to the adherend (polyimide, copper foil and so on), it is possible to utilize the known connection methods such as a bonding method by means of a heat press, a direct lamination method by means of an extruder or calender, and a connection method with heat and pressure by means of a film laminator.

Moreover, it is performed by: dissolving in a solvent which does not affect the other members; coating evenly on a surface of the member; connecting preliminarily to the adherened (polyimide, copper foil and so on); and hardening by heat or light.

As a hardening condition of the aniostropic conductive film, in the case of the heat hardening, a temperature is normally 70 - 170 °C preferably 70 - 150°C and a time is normally 10 seconds - 120 minutes preferably 20 seconds - 60 minutes; and they depend on a kind of the organic peroxide to be used.

In the case of the light hardening using the photosensitizer, various lamps which emit a light from ultraviolet light to visible light can be used as a light source, and use may be normally made of very high pressure mercury lamp, high pressure mercury lamp, low pressure mercury lamp, chemical lamp, xenon lamp, halogen lamp, mercury halogen lamp, carbon arc lamp, incandescent lamp, laser light and so on.

A light emitting time is not decided primarily by a condition such as kinds of lamp and light intensity of the light source, but it is normally several ten seconds to several ten minutes. Moreover, in order to promote a hardening, a laminated body is preliminarily heated to a temperature of 40 - 120 °C, and the an ultraviolet light is emitted to the body.

The anisotropic conductive film can be obtained by adding organic peroxide and/or photosensitizer, silane coupling agent, compound including epoxy base substance, together with conductive particles into the polymer and forming the film.

Since an adhesive of the anisotropic conductive film has the polymer mentioned above as a main ingredient, it has the following features: (1) A repair property is excellent; (2) A transparent property is excellent; (3) A high adhesion property is exerted stably as compared with the known one; (4) A light transmittance property during an electrode positioning and a workability are excellent, since use is made of the film including the transparent polymer mentioned above as a main ingredient; (5) It is possible to perform a hardening connection at a low temperature, since the hardening connection can be performed at a temperature of 100 °C or low while the known epoxy base substance needs a heating over 150 °C, and UV hardening can be performed; and (6) A workability is excellent, since the anisotropic conductive film including the polymer mentioned above as a main ingredient has a high adhesion force during the preliminarily connection while the known anisotropic conductive film including epoxy base or phenol base substance has no adhesion property and it is difficult to perform a preliminarily adhesion connection between the film and the electrode, so that it is easy to peel off and a workability is bad.

Then, the first aspect of the invention will be explained in detail with reference to examples according to the invention and comparative examples. However, the present invention is not limited to the examples mentioned below.

<Embodiment of the first aspect of the invention>

Example 1 (first embodiment: particles)

A polymer, in which hydroxy group of saturated polyester was substituted into metacryoxy group, was used as a base resin. By utilizing the base resin, a solution, in which 15 wt% of toluene was included, was prepared. With respect to 100 parts by weight of the base resin, 2 parts by weight of benzoil peroxide, 5 parts by weight of butylated melamine resin (produced by DAINIPPON INK AND CHEMICAL, INCORPORATED, Super Bekkamin L125-60), 3 parts by weight of phosphoric methacrylate (produced by Kyoei Kagaku Kogyo Co., Ltd., PIM), 20 parts by weight of polyethylene glycol diacrylate, 0.5 parts by weight of $\gamma$-methacryoxypropyltrimethoxysilane, were added and then mixed to obtain a mixture. Then, 4 parts by weight of conductive particles (produced by Nippon Chemical Industrial CO., LTD., 16GNR10.0MX, particle diameter: 5 $\mu$m) with respect to 100 parts by weight of the base resin was mixed with the mixture, and cast at 70 °C by means of a roll coater, so that an anisotropic conductive film having a thickness of 20 $\mu$m was prepared. An adhesion force of the thus prepared anisotropic conductive film was 1.2 kg/inch when a pressurized connection was performed at 140 °C for 10 seconds, and a conductive resistance thereof was 2.5 $\Omega$.

Then, an image display device having a display element with a structure shown in Fig. 1 was prepared. A glass substrate was employed as the transparent substrate, an epoxy substrate was employed as the opposed substrate, and the anisotropic conductive film was employed as the display electrode and the opposed electrode. A fixing operation of the anisotropic conductive film was performed by heating it under 3 MPa at 140 °C for 10 seconds. In this case, on the surfaces of respective electrodes, an insulating silicon resin was coated with the thickness about 3 $\mu$m for the purpose of preventing an adhesion and a charge leakage. Black toners (spherical toners with average particle diameter of 8 $\mu$m, surface charge density of $-50 \mu C/m^2$, the surface potential of 450 V at 0.3 second after the foregoing surface potential measurement) for electro-photography were employed as the negatively chargeable particles. Polymerized particles of styrene-acrylic resin (spherical toners with average particle diameter of 8 $\mu$m, surface charge density of +45 $\mu$C/m$^2$, the surface potential of 500 V at 0.3 second after the foregoing surface potential measurement) produced by using titanium oxide as the white pigment and ammonium salt compound of fourth grade as the electric charge control agent were employed as the positively chargeable particles. For the purpose of charging the particles, an equivalent amount of both particles were mixed and agitated and frictional charging was conducted. Setting the height of the partition walls as 200 µm, the volume population of the particles among the space between the substrates was adjusted to 70 %.

When DC voltage of 200 V was applied in such a manner that the display electrode was a high potential and the opposed electrode was a low potential, the negatively chargeable particles flew and moved towards the display electrode, so that a white color was displayed on the image display element. Then, if the applied voltage was inversed, the negatively chargeable particles flew and moved towards the opposed electrode, so that a black color was displayed on the image display element.

The response time for the applied voltage was measured to be 1 msec. Even after leaving the display device cutting off the applied voltage for one day, each display was maintained.

Further, although the polarity of the applied voltage was reversed repeatedly for 10,000 times, there was almost no variation of the response rate.

Example 2 (first embodiment : particles)

An image display device was prepared in the same manner as that of the example 1 except that use was made of 20 parts by weight of neopentyl glycol dimethacrylate in spite of 20 parts by weight of polyethylene glycol diacrylate during the anisotropic film forming in the example 1.

An adhesion force of the anisotropic conductive film was 1.1 kg/inch, and a conductive resistance thereof was 2.5 $\Omega$. The performance of the image display device was the same as that of the example 1.

Reference example 1 (first embodiment: particles)

An image display device was prepared in the same manner as that of the example 1 except that butylated melamine resin and phosphoric methacrylate were not used during the anisotropic film forming in the example 1.

An adhesion force of the anisotropic conductive film was 0.4 kg/inch, and a conductive resistance thereof was 2.9 $\Omega$. The performance of the image display device was the same as that of the example 1.

Then, the image display device utilizing the liquid powders was discussed as the second embodiment of the first aspect of the invention. In this case, physical properties of the liquid powders and functions of the image display device according to below examples and comparative examples in the first aspect of the invention were estimated in accordance with following standards.

(1) Particle diameter distribution Span and particle diameter of the liquid powders

Respective liquid powder was installed in Mastersizer 2000 apparatus (Malvern Instruments Ltd.) and the particle diameter distribution Span was obtained from the following formula by utilizing attached software (software for calculating the particle size distribution and the particle size on the basis of a volume standard distribution):

Particle diameter distribution Span = (d(0.9) — d(0.1))/d(0.5) ; (here, d(0.5) means a value of the particle size expressed by µm wherein an amount of the particles having the particle size larger than or smaller than this value is 50%, d(0.1) means a value of the particle size expressed by µm wherein an amount of the particles having the particle size smaller than this value is 10%, and d(0.9) means a value of the particle size expressed by µm wherein an amount of the particles having the particle size smaller than this value is 90%).

The particle diameter (µm) was d(0.5) mentioned above.

(2) Apparent volume in a maximum floating state of the liquid powders /apparent volume in none floating state ($V_{max}/V_0$)

They were measured in accordance with the method described above.

(3) Time change of apparent volume of liquid powders ($V_{10}/V_5$)

They were measured in accordance with the method described above with reference to the apparent volume $V_5$ (cm$^3$) of the liquid powders after 5 minutes from the maximum floating state and the apparent volume $V_{10}$ (cm$^3$) of the liquid powders after 10 minutes from the maximum floating state.

(4) Solvent insoluble rate of liquid powders

The liquid powder was immersed into MEK solvent for 24 hours at 25°C and was dried for 5 hours at 100°C. After that, a weight of the liquid powder was measured. The solvent insoluble rate was measured according to the following formula on the basis of a weight deviation of the liquid powder before and after the immersion:

$$\text{solvent insoluble rate (\%)} = (B/A) \times 100;$$

(here, A is a weight of the liquid powder before being immersed into the solvent and B is a weight of liquid powder after the particle is immersed into MEK solvent at 25°C for 24 hours).

(5) Functional estimation of the image display device

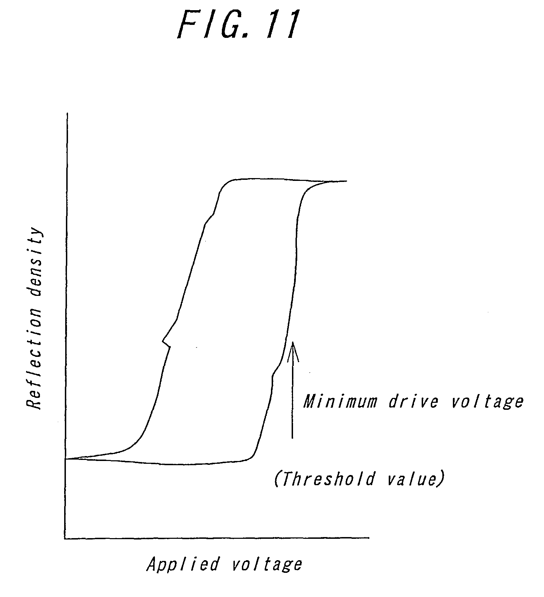

With respect to the manufactured image display device, the measurement was performed by increasing the applied voltage and a voltage at which the particle started to move so as to display the image was assumed to a minimum drive voltage. Specifically, a voltage at threshold value shown in Fig. 11 was assumed to be the minimum drive voltage.
Then, a voltage of the minimum drive voltage +10 V was applied and a potential was inverted, so that a display of black color - white color was repeated.
The estimation of the display function was performed by measuring initial contrast ratio, contrast ratio after 20000 times repetition and contrast ration after 5 days left by utilizing a reflection image densitometer. Here, the contrast ratio is obtained from the formula: contrast ratio = reflection density at black color display/ reflection density at white color display. For reference, contrast ratio maintaining rates were measured at after 20000 times repetition and after 5 days left with respect to the initial contrast ratio.
The response rate was measured from a deviation of an output value by means of a photomultiplier.

Example 3 (second embodiment: liquid powder)

(Production of anisotropic conductive film)

A polymer, in which hydroxy group of saturated polyester was substituted into metacryoxy group, was used as a base resin. By utilizing the base resin, a solution, in which 15 wt% of toluene was included, was prepared. With respect to 100 parts by weight of the base resin, 2 parts by weight of benzoil propylether (photosensitizer), 5 parts by weight of butylated melamine resin (produced by DAINIPPON INK AND CHEMICAL, INCORPORATED, Super Bekkamin L125-60), 3 parts by weight of phosphoric methacrylate (produced by Kyoei Kagaku Kogyo Co., Ltd., PIM), 20 parts by weight of polyethylene glycol diacrylate, 0.5 parts by weight of γ-methacryoxypropyltrimethoxysilane, were added and then mixed to obtain a mixture. Then, 4 parts by weight of conductive particles (produced by Nippon Chemical Industrial CO., LTD., 16GNR10.0MX, particle diameter: 5 μm) with respect to 100 parts by weight of the base resin was mixed with the mixture, and cast at 70 °C by means of a roll coater, so that an anisotropic conductive film having a thickness of 20 μm was prepared. An adhesion force of the thus prepared anisotropic conductive film was 0.8 kg/inch when a pressurized connection was performed at 140 °C for 10 seconds, and a conductive resistance thereof was 2.7 Ω.

(Production of liquid powder)

Two kinds of the liquid powders (liquid powder X, liquid powder Y) were prepared.
The liquid powder X was produced as follows. At first, methyl methacrylate monomer, $TiO_2$ (20 phr), charge control agent bontron E89 (Orient Chemical Industries, Ltd.: 5 phr), initiator AIBN (0.5 phr) were suspended and polymerized. After that, particle sizes of the polymerized particles were graded by using a grading device. Then, by using hybridizer (Nara Machinery Co., Ltd.), the polymerized particles, external additive A (silica H2000/4, Wacker Ltd.) and external additive B (silica SS20, Japan Silica Ltd.) were set therein and treated at 4800 rpm for 5 minuets, so that the external additives were fixed on a surface of the polymerized particles to obtain the liquid powder.
The liquid powder Y was produced as follows. At first, styrene monomer, azo compounds (5 phr), charge control agent bontron N07 (Orient Chemical Industries, Ltd.: 5 phr), initiator AIBN (0.5 phr) were suspended and polymerized. After that, particle sizes of the polymerized particles were graded by using a grading device. Then, by using hybridizer (Nara Machinery Co., Ltd.), the polymerized particles, external additive A (silica H2050, Wacker Ltd.) and external additive B (silica SS20, Japan Silica Ltd.) were set therein and treated at 4800 rpm for 5 minutes, so that the external additives were fixed on a surface of the polymerized particles to obtain the liquid powder.

The solid state properties of the liquid powder X and the liquid powder Y i.e. the above mentioned (1) average particle diameter and particle diameter distribution of the liquid powder, (2) ratio of apparent volume at maximum floating state of the liquid powder and apparent volume at none floating state, (3) time change of the apparent volume of the liquid powder ($V_{10}/V_5$), and (4) solvent insoluble rate of the liquid powder were shown in table 1.

(Production of display device)

At first, a substrate with an electrode, to which the following partition wall was formed, was produced.

On a glass substrate to which indium oxide having a thickness of about 500 Å was arranged via the above anisotropic conductive film, a rib having a height of 250 µm was produced to form a partition wall having a stripe shape and a single lever construction.

The production of the rib was performed as follows. As an inorganic powder, a glass powder was prepared by melting, cooling and grinding a mixture of $SiO_2$, $Al_2O_3$, $B_2O_3$, $Bi_2O_3$, and ZnO. As a resin, epoxy resin having heat hardening property was prepared. Then, the glass powder and the epoxy resin were mixed with a solvent and controlled to be a viscosity of 15000 cps, so that a paste was produced.

Then, the paste was applied on a substrate and heated at 150°C to be hardened. By repeating the above paste applying and heating steps, a thickness (corresponding to a height of the partition wall) was controlled to be 200 µm (sand blasting method).

Then, a dry photo-resist was adhered. With respect to the adhered dry photo-resist, an exposing step and an etching step were performed so as to form a mask by which a partition wall pattern having a line of 50 µm, a space of 200 µm and a pitch of 250 µm can be formed.

Then, unnecessary portions were removed by a sandblast to form a predetermined partition wall having a stripe shape.

The liquid powder X was tentatively adhered to the glass substrate on which the indium oxide electrode is arranged by means of the electrostatic coating machine, and the liquid powder Y was tentatively adhered to another glass substrate. Then, the glass substrates were opposed with a spacing of 120 µm by using the spacer, and a periphery of the glass substrate is connected by means of epoxy adhesive agent, so that the display device, in which the liquid powder is sealed, was produced. The mixing ratio of the liquid powder X and the liquid powder Y was controlled to be even, and the filling rate of the liquid powder between the glass substrates was controlled to be 60 vol % as the volume occupied rate. Here, the gas surrounding the liquid powder in the gap between the substrates was an air having a relative humidity of 35% RH.

The estimation results of the display function in the display device were shown in the following Table 1.

Example 4 (second embodiment: liquid powder)

An image display device was produced in the same manner as that of the example 3 except that the main ingredient in the liquid powder X and the liquid powder Y was changed to urethane (in the liquid powder, carbon was used together).

The solid state properties of the thus obtained liquid powder X and the thus obtained liquid powder Y and the estimation results of the display functions of the image display device were shown in Table 1.

Example 5 (second embodiment: liquid powder)

An image display device was produced in the same manner as that of the example 3 except that an amount of the initiator AIBN in the liquid powder X and the liquid powder Y was changed to 0.1 phr.

The solid state properties of the thus obtained liquid powder X and the thus obtained liquid powder Y and the estimation results of the display functions of the image display device were shown in Table 1. Since the amount of the initiator AIBN was decreased, the solvent insoluble rate was decreased and the stability after a lapse of time was rather deteriorated.

Example 6 (second embodiment: liquid powder)

An image display device was produced in the same manner as that of the example 3 except that the grading operation after the suspension and polymerize during the production of the liquid powder X and the liquid powder Y was not performed.

The solid state properties of the thus obtained liquid powder X and the thus obtained liquid powder Y and the estimation results of the display functions of the image display device were shown in Table 2. Since the grading operation was not performed, the particle diameter distribution Span was increased and the durability was rather deteriorated.

Example 7 (second embodiment: liquid powder)

An image display device was produced in the same manner as that of the example 3 except that the relative humidity in the gap surrounding the liquid powders between the substrates was changed to 80 %RH.
The estimation results of the display functions of the image display device were shown in Table 2. Since the humidity of the gap was high, the durability was rather deteriorated.

Example 8 (second embodiment: liquid powder)

An image display device was produced in the same manner as that of the example 3 except that the partition walls were not formed. The estimation results of the display functions of the image display device were shown in Table 2. Since the partition walls were not formed, the durability was rather deteriorated.

Comparative example 1 (second embodiment: liquid powder)

An image display device was produced in the same manner as that of the example 3 except that the hybridizer operating condition was changed to 4800 rpm for 1 minute during the production of the liquid powder X and the liquid powder Y.
The solid state properties of the thus obtained liquid powder X and the thus obtained liquid powder Y and the estimation results of the display functions of the image display device were shown in Table 3. Since the hybridizer operating condition was changed, a state of the liquid powders was deteriorated. As a result, the drive voltage was increased, the durability was deteriorated and the response rate became slow.

Comparative example 2 (second embodiment: liquid powder)

An image display device was produced in the same manner as that of the example 3 except that the hybridizer operating condition was changed to 4800 rpm for 30 minutes during the production of the liquid powder X and the liquid powder Y.
The solid state properties of the thus obtained liquid powder X and the thus obtained liquid powder Y and the estimation results of the display functions of the image display device were shown in Table 3. Since the hybridizer operating condition was changed, a state of the liquid powders was deteriorated. As a result, the drive voltage was increased, the durability was deteriorated and the response rate became slow.

Comparative example 3 (second embodiment: liquid powder)

An image display device was produced in the same manner as that of the example 3 except that commercially available toners for xerography were used as the liquid powder X and the liquid powder Y. The solid state properties of the thus obtained liquid powder X and the thus obtained liquid powder Y and the estimation results of the display functions of the image display device were shown in Table 3. Since the toners for xerography were used, a state of the liquid powders was deteriorated. As a result, the drive voltage was increased, the durability was deteriorated and the response rate became slow.

Example 9 (second embodiment: liquid powder)

An image display device was prepared in the same manner as that of the example 3 except that use was made of 20 parts by weight of neopentyl glycol dimethacrylate in spite of 20 parts by weight of polyethylene glycol diacrylate during the anisotropic film forming in the example 3.
An adhesion force of the anisotropic conductive film was 0.7 kg/inch, and a conductive resistance thereof was 2.5 Ω. The performance of the image display device was the same as that of the example 3.

Reference example 2 (second embodiment: liquid powder)

An image display device was prepared in the same manner as that of the example 3 except that butylated melamine resin and phosphoric methacrylate were not used during the anisotropic film forming in the example 3.
An adhesion force of the anisotropic conductive film was 0.5 kg/inch, and a conductive resistance thereof was 2.8 Ω. The performance of the image display device was the same as that of the example 3.

Table 1

| | Example 3 | Example 4 | Example 5 |
|---|---|---|---|
| Liquid powder X | | | |
| (Material of liquid powder) | | | |
| Main material | MAA monomer | urethane | MAA monomer |
| | $TiO_2$ | $TiO_2$ | $TiO_2$ |
| Initiator (phr) | AIBN (0.5) | | AIBN (0.1) |
| Charge control agent | bontron 89 | bontron 89 | bontron 89 |
| Material of external additive A | silica H2000/4 | silica H2000/4 | silica H2000/4 |
| Diameter (nm) | 20 | 20 | 20 |
| Material of external additive B | silica SS20 | silica SS20 | silica SS20 |
| Diameter (nm) | 25 | 25 | 25 |
| External additive adhesion state: processing time of hybridizer (min.) | 5 | 4 | 5 |
| (Solid state properties of liquid powder) | | | |
| Particle diameter (μm) | 3.3 | 5.2 | 4.1 |
| Distribution of particle diameter Span | 1.6 | 1.9 | 1.8 |
| $V_{max}/V_0$ | 3.1 | 2.5 | 2.6 |
| $V_{10}/V_5$ | 0.91 | 0.88 | 0.87 |
| Solvent insoluble rate (%) | 92 | 92 | 48 |
| Liquid powder Y | | | |
| (Material of liquid powder) | | | |
| Main material Main material | styrene monomer | urethane | styrene monomer |
| | azo-series compound | carbon | azo-series compound |
| Initiator (phr) | AIBN(0.5) | | AIBN(0.1) |
| Charge control agent | bontron 07 | bontron 07 | bontron 07 |
| Material of external additive A | silica H2050 | silica H2050 | silica H2050 |
| Diameter (nm) | 20 | 20 | 20 |
| Material of external additive B | silica SS20 | silica SS20 | silica SS20 |
| Diameter (nm) | 25 | 25 | 25 |
| External additive adhesion state: processing time of hybridizer (min.) | 5 | 7 | 5 |
| (Solid state properties of liquid powder) | | | |
| Particle diameter (μm) | 3.1 | 5.1 | 4.2 |
| Distribution of particle diameter Span | 1.7 | 2.0 | 1.9 |
| $V_{max}/V_0$ | 3.2 | 2.6 | 2.7 |
| $V_{10}/V_5$ | 0.92 | 0.88 | 0.88 |
| Solvent insoluble rate (%) | 92 | 92 | 49 |
| Relative humidity of gap gas (%) | 35 | 35 | 35 |

Table 1   (continued)

|  | Example 3 | Example 4 | Example 5 |
|---|---|---|---|
| Liquid powder X |  |  |  |
| (Material of liquid powder) |  |  |  |
| Partition wall | existence | existence | existence |
| (Estimation of display function) |  |  |  |
| Minimum drive voltage (V) | 20 | 23 | 24 |
| Initial contrast ratio | 9.2 | 7.8 | 9.2 |
| Contrast ratio after 20000 times | 8.37 | 6.94 | 8.00 |
| Maintaining rate (%) | 91 | 89 | 87 |
| Contrast rate after 5 days left | 8.91 | 6.79 | 6.35 |
| Maintaining rate (%) | 89 | 87 | 69 |
| Response rate (m/sec) | 0.1 | 0.2 | 0.3 |

Table 2

|  | Example 6 | Example 7 | Example 8 |
|---|---|---|---|
| Liquid powder X |  |  |  |
| (Material of liquid powder) |  |  |  |
| Main material | MAA monomer | MAA monomer | MAA monomer |
|  | $TiO_2$ | $TiO_2$ | $TiO_2$ |
| Initiator (phr) | AIBN (0.5) | AIBN (0.5) | AIBN (0.1) |
| Charge control agent | bontron 89 | bontron 89 | bontron 89 |
| Material of external additive A | silica H2000/4 | silica H2000/4 | silica H2000/4 |
| Diameter (nm) | 20 | 20 | 20 |
| Material of external additive B | silica SS20 | silica SS20 | silica SS20 |
| Diameter (nm) | 25 | 25 | 25 |
| External additive adhesion state: processing time of hybridizer (min.) | 5 | 5 | 5 |
| (Solid state properties of liquid powder) |  |  |  |
| Particle diameter ($\mu$m) | 4.2 | 3.3 | 3.3 |
| Distribution of particle diameter Span | 5.1 | 1.6 | 1.6 |
| $V_{max}/V_0$ | 2.1 | 3.1 | 3.1 |
| $V_{10}/V_5$ | 0.81 | 0.91 | 0.91 |
| Solvent insoluble rate (%) | 91 | 92 | 92 |
| Liquid powder Y |  |  |  |
| (Material of liquid powder) |  |  |  |
| Main material Main material | styrene monomer | styrene monomer | styrene monomer |
|  | azo-series compound | azo-series compound | azo-series compound |
| Initiator (phr) | AIBN(0.5) | AIBN(0.5) | AIBN(0.5) |
| Charge control agent | bontron 07 | bontron 07 | bontron 07 |

Table 2   (continued)

| | Example 6 | Example 7 | Example 8 |
|---|---|---|---|
| Liquid powder X | | | |
| (Material of liquid powder) | | | |
| Material of external additive A | silica H2050 | silica H2050 | silica H2050 |
| Diameter (nm) | 20 | 20 | 20 |
| Material of external additive B | silica SS20 | silica SS20 | silica SS20 |
| Diameter (nm) | 25 | 25 | 25 |
| External additive adhesion state: processing time of hybridizer (min.) | 5 | 5 | 5 |
| (Solid state properties of liquid powder) | | | |
| Particle diameter (μm) | 4.3 | 3.1 | 3.1 |
| Distribution of particle diameter Span | 5.2 | 1.7 | 1.7 |
| $V_{max}/V_0$ | 2.0 | 3.2 | 3.2 |
| $V_{10}/V_5$ | 0.80 | 0.92 | 0.92 |
| Solvent insoluble rate (%) | 91 | 92 | 92 |
| Relative humidity of gap gas (%) | 35 | 35 | 35 |
| Partition wall | existence | existence | existence |
| (Estimation of display function) | | | |
| Minimum drive voltage (V) | 42 | 38 | 21 |
| Initial contrast ratio | 9.0 | 8.8 | 9.2 |
| Contrast ratio after 20000 times | 7.38 | 7.04 | 7.73 |
| Maintaining rate (%) | 82 | 80 | 84 |
| Contrast rate after 5 days left | 7.20 | 6.07 | 7.36 |
| Maintaining rate (%) | 70 | 69 | 80 |
| Response rate (m/sec) | 1.1 | 2.1 | 0.2 |

Table 3

| | Comparative Example 1 | Comparative Example 2 | Comparative Example 3 |
|---|---|---|---|
| Liquid powder X | | | |
| (Material of liquid powder) | | | |
| Main material | MAA monomer | MAA monomer | commercially available toner (yellow) |
| | $TiO_2$ | $TiO_2$ | |
| Initiator (phr) | AIBN (0.5) | AIBN (0.5) | |
| Charge control agent | bontron 89 | bontron 89 | |
| Material of external additive A | silica H2000/4 | silica H2000/4 | |
| Diameter (nm) | 20 | 20 | |

Table 3   (continued)

| | Comparative Example 1 | Comparative Example 2 | Comparative Example 3 |
|---|---|---|---|
| Liquid powder X | | | |
| (Material of liquid powder) | | | |
| Material of external additive B | silica SS20 | silica SS20 | |
| Diameter (nm) | 25 | 25 | |
| External additive adhesion state: | | | |
| processing time of hybridizer (min.) | 1 | 30 | |
| (Solid state properties of liquid powder) | | | |
| Particle diameter (µm) | 4.7 | 4.9 | 7.2 |
| Distribution of particle diameter Span | 2.2 | 1.8 | 1.8 |
| $V_{max}/V_0$ | 1.2 | 1.2 | 1.2 |
| $V_{10}/V_5$ | 0.69 | 0.58 | 0.68 |
| Solvent insoluble rate (%) | 91 | 92 | 90 |
| Liquid powder Y | | | |
| (Material of liquid powder) | | | |
| Main material | styrene monomer | styrene monomer | commercially available toner (black) |
| | azo-series compound | azo-series compound | |
| Initiator (phr) | AIBN(0.5) | AIBN(0.5) | |
| Charge control agent | bontron 07 | bontron 07 | |
| Material of external additive A | silica H2050 | silica H2050 | |
| Diameter (nm) | 20 | 20 | |
| Material of external additive B | silica SS20 | silica SS20 | |
| Diameter (nm) | 25 | 25 | |
| External additive adhesion state: | | | |
| processing time of hybridizer (min.) | 1 | 30 | |
| (Solid state properties of liquid powder) | | | |
| Particle diameter (µm) | 4.8 | 5.0 | 6.9 |
| Distribution of particle diameter Span | 2.2 | 1.8 | 1.8 |
| $V_{max}/V_0$ | 1.2 | 1.2 | 1.2 |
| $V_{10}/V_5$ | 0.69 | 0.59 | 0.70 |

Table 3   (continued)

|  | Comparative Example 1 | Comparative Example 2 | Comparative Example 3 |
|---|---|---|---|
| Liquid powder X |  |  |  |
| (Material of liquid powder) |  |  |  |
| Solvent insoluble rate (%) | 92 | 90 | 90 |
| Relative humidity of gap gas (%) | 35 | 35 | 35 |
| Partition wall | absence | existence | existence |
| (Estimation of display function) |  |  |  |
| Minimum drive voltage (V) | 95 | 88 | 125 |
| Initial contrast ratio | 8.8 | 9 | 6.7 |
| Contrast ratio after 20000 times | 4.93 | 4.59 | 3.35 |
| Maintaining rate (%) | 56 | 51 | 50 |
| Contrast rate after 5 days left | 4.40 | 4.32 | 3.15 |
| Maintaining rate (%) | 70 | 48 | 47 |
| Response rate (m/sec) | 11.0 | 8.1 | 8.9 |

(As to the second aspect of the invention)

The feature of the image display device according to the second aspect of the invention is to integrate the image display panel and the optical function member through a transparent elastic layer.

In the image display device integrated with the optical function member, if a stress is applied to the screen, a strain occurs thereon and thus there is a drawback such that an image on the screen is distorted. Particularly, this distortion occurs remarkably in the case that the screen is formed by the image display panel. Therefore, in the known image display device integrated with the optical function member, the optical function member and the image display panel are connected through spacers to make a gap of about 0.4 mm between them, so that a stress is not applied to the screen.

However, such gap causes a scattering and absorbing of the reflected light, and thus a contrast ratio, which is important as the display, is decreased drastically. In addition, there is a drawback on a decrease of visibility, a parallax feeling when the image starts to display, a generation of a display shadow.

The present invention is achieved to eliminate the drawbacks mentioned above and has for its object to provide the image display device integrated with the optical function member, in which the optical function member such as an anti-reflection glass and the display panel can be connected with no gap, a light transmittance state is excellent, the decrease of constant ratio can be prevented, and the display performance is excellent.

As the optical function member in the image display device according to the invention, use may be made of the known one, for example, an anti-reflection glass having a light transmittance state, an anti-reflection film, an anti-static glass, an anti-static film, a radio wave shield member, a near-infrared ray absorbing film, a color filter, a touch panel, a protect panel for portable phone. As a material, use may be made of polycarbonate, glass, acrylic resin. These optical function members can be selected and used suitably as usage of the image display device according to the invention.

As the transparent elastic layer in the image display device according to the invention, use may be made of the known one if its refraction index is controlled in the manner mentioned below, i.e., as a main member, use may be made of polyisoprene, synthetic rubber such as polybutadiene, olefin base elastomer such as EVA, polyurethane base elastomer, polyvinyl butyral, vinyl chloride base elastomer, styrene base elastomer such as SBS, SIS, acryl base resin, silicon base polymer. Particularly, the use of acryl base resin is recommended.

In the transparent elastic layer of the image display device according to the invention, the above materials are recommended to use as a main member. According to need, the other materials may be added. As the other materials to be added together with the main member, use may be made of organic peroxide, photosensitizer, elasticizer, adhesion promotion agent, hydrocarbon resin, antioxidant (polymerization prevention agent, oxidation inhibitor, ultraviolet absorption agent and so on), the other inorganic or organic filler. Moreover, an effective amount of the known fire retardant agent of inorganic base, halogen base and phosphorous base may be added. In this case, 0.1-50 parts by weight of these materials may be normally added in accordance with its purpose with respect to 100 parts by weight of the main member.

The transparent elastic layer may be formed by directly coating the above materials to the member, or, may be formed by means of the known film forming method such as calender roll, T-die extrusion, inflation so as to obtain a film shape. In this case, a thickness of the transparent elastic layer is preferably 0.01 - 5 mm more preferably 0.05 - 3 mm.

In the image display device according to the invention, when it is assumed that a refractive index of the transparent elastic layer is no, a refractive index of the optical function member is $n_1$ and a refractive index of the transparent substrate is $n_2$, it is necessary to control the refractive index of the transparent elastic layer $n_0$ with respect to the refractive index of the optical function member is $n_1$ and the refractive index of the transparent substrate is $n_2$. Particularly, it is preferred to set an absolute of a difference between $n_0$ and $n_1$ and an absolute of a difference between $n_0$ and $n_2$ to not greater than 0.2 respectively more preferably not greater than 0.1 respectively.

By effectively controlling these refractive indexes, it is possible to achieve an excellent light transmittance state, prevent a decrease of the contrast ratio and obtain an excellent display property certainly. If these differences between the refractive indexes are too large, a reflection property becomes larger and a visibility is decreased.

In the transparent elastic layer according to the invention, it is preferred that, when it is assumed that a strain ($\varepsilon_0$) at 25 °C of a stress relaxation is 5 % and an initial value (after 0.05 sec) of a stress relaxation elastic modulus is Go, Go is not greater than $6.5 \times 10^6$ Pa more preferably not greater than $5.5 \times 10^6$ Pa. In addition, it is preferred to set a lower limit to not less than $4.0 \times 10^6$ Pa.

By controlling the initial value of the stress relaxation elastic modulus Go in this range, if a surface of a protection panel and so on is pressed, the display portion is not affected, so that it is possible to certainly prevent a distortion of the display portion, a color shading and so on. If exceeding the above range, it is not possible to prevent a distortion of the display panel and thus the display panel is liable to be fractured. If it is less than the lower limit, a mechanical strength after the connection is not sufficient and thus a decrease of the heat resistance sometimes occurs.

Moreover, in the transparent elastic layer according to the invention, it is preferred that a stress relaxation time $\tau$ calculated on the basis of a formula:

$$\ln G(t) = - t/\tau + \ln G_0$$

showing a relation between a stress relaxation elastic modulus G and a time t (sec.) obtained from a damping curve of the relaxation elastic modulus, is not greater than 17 sec more preferably not greater than 12 sec. In addition, it is preferred to set a lower limit to not less than 7 sec.

By controlling the stress relaxation time in this manner, it is possible to certainly reduce a distortion of the display portion. In addition, it is possible to certainly prevent a generation of the color shading etc. on the display screen of the image display device. In this case, if the relaxation time exceeds the above range, it is not possible to reduce a static distortion and thus the color shading is liable to occur.

In order to obtain the image display device integrated with the optical function member, so long as the image display panel and the optical function member are integrated through the transparent elastic member, the manufacturing method is not limited particularly. For example, use may be made of a method in which the transparent elastic layer is preliminarily formed in accordance with the above method and are connected by using a predetermined additive, or, a method in which a melted material of the transparent elastic layer is coated on one surface of the optical function member or the image display panel and the other one is connected thereto so as to integrate them. As the integrating method, use may be made of the known method such as a vacuum press method, a nip roll method and so on. In the case that an air remains at a boundary, a liquid adhesive may be used together with the above integrating method, or, use may be made of a method in which a pressurized heating is utilized by an autoclave and so on.

Then, the second aspect of the invention will be explained in detail with reference to examples according to the invention and comparative examples. However, the present invention is not limited to the examples mentioned below.

<Embodiment of the second aspect of the invention>

Reference example 1 (first embodiment: particles)

An image display device having a display element with a structure shown in Fig. 1 was prepared. A glass substrate was employed as the transparent substrate, an epoxy substrate was employed as the opposed substrate, and a copper electrode was employed as the display electrode and the opposed electrode. In this case, on the surfaces of respective electrodes, an insulating silicon resin was coated with the thickness about 3 μm for the purpose of preventing an adhesion and a charge leakage. Black toners (spherical toners with average particle diameter of 8 μm, surface charge density of $-50$ μC/m$^2$, the surface potential of 450 V at 0.3 second after the foregoing surface potential measurement) for electro-photography were employed as the negatively chargeable particles. Polymerized particles of styrene-acrylic resin (spherical toners with average particle diameter of 8 μm, surface charge density of +45 μC/m$^2$, the surface potential of 500 V at 0.3 second after the foregoing surface potential measurement) produced by using titanium oxide as the white pigment and ammonium salt compound of fourth grade as the electric charge control agent were employed as the positively chargeable particles. For the purpose of charging the particles, an equivalent amount of both particles were mixed and agitated and frictional charging was conducted. Setting the height of the partition walls as 200 μm, the volume population of the particles among the space between the substrates was adjusted to 70 %.

When DC voltage of 200 V was applied in such a manner that the display electrode was a high potential and the opposed electrode was a low potential, the negatively chargeable particles flew and moved towards the display electrode, so that a white color was displayed on the image display element. Then, if the applied voltage was inversed, the negatively chargeable particles flew and moved towards the opposed electrode, so that a black color was displayed on the image display element.

The response time for the applied voltage was measured to be 1 msec. Even after leaving the display device cutting off the applied voltage for one day, each display was maintained. Further, although the polarity of the applied voltage was reversed repeatedly for 10,000 times, there was almost no variation of the response rate.

As to an amount of a transmitted light, a light beam was applied to a surface of the thus obtained image display panel from a light and a reflected light was measured by a luminance meter, so that a standard value (100 %) was defined by an amount of the reflected light at that time.

Example 11 (first embodiment: particles)

The image display panel obtained in accordance with the reference example 11 was used as the display portion, and a glass transparent substrate having a refractive index $n_2$=1.49 was arranged on both surfaces. On one transparent substrate of the display panel, acryl base adhesive (produced by Soken Chemical & Engineering Co., Ltd., product name SK-DYNE 1831) was coated as the transparent elastic layer, and a polycarbonate protection window (thickness: 1.5 mm, refractive index $n_1$=1.59) was adhered on the coated surface as the optical function member, so that the image display device integrated with the optical function member was manufactured.

The thus formed transparent elastic layer had properties such as thickness: 0.5 mm, refractive index $n_0$=1.49, $G_0$=5.5×10$^6$ Pa and stress relaxation time: 12 seconds.

An amount of a transmitted light in this image display device integrated with the optical function member was 95 %, in the case that the reflected light amount of the reference example 11 was assumed to the standard value (100 %).

Comparative example 11 (first embodiment: particles)

On the transparent substrate of the image display panel obtained in accordance with the reference example 11, the polycarbonate protection window as is the same as the example 11 was adhered through a spacer (height: 0.5 mm) by means of the known method, the image display device integrated with the optical function member was manufactured in which an air gap having a thickness of 0.5 mm was arranged between the transparent substrate of the image display panel and the polycarbonate protection window. An amount of a transmitted light in this image display device integrated with the optical function member was 87 %, in the case that the reflected light amount of the reference example 11 was assumed to the standard value (100 %).

Then, as the second embodiment of the second aspect of the invention, the image display panel utilizing the liquid powders was examined. It should be noted that the physical properties of the liquid powders and the functions of the display device in examples and comparative examples according to the following second aspect of the invention were estimated in accordance with the same standard as those of the above-mentioned first aspect of the invention.

Reference example 12 (second embodiment: liquid powder)

(Production of liquid powder)

Two kinds of the liquid powders (liquid powder X, liquid powder Y) were prepared.

The liquid powder X was produced as follows. At first, methyl methacrylate monomer, TiO$_2$ (20 phr), charge control agent bontron E89 (Orient Chemical Industries, Ltd.: 5 phr), initiator AIBN (0.5 phr) were suspended and polymerized. After that, particle sizes of the polymerized particles were graded by using a grading device. Then, by using hybridizer (Nara Machinery Co., Ltd.), the polymerized particles, external additive A (silica H2000/4, Wacker Ltd.) and external additive B (silica SS20, Japan Silica Ltd.) were set therein and treated at 4800 rpm for 5 minuets, so that the external additives were fixed on a surface of the polymerized particles to obtain the liquid powder.

The liquid powder Y was produced as follows. At first, styrene monomer, azo compounds (5 phr), charge control agent bontron N07 (Orient Chemical Industries, Ltd.: 5 phr), initiator AIBN (0.5 phr) were suspended and polymerized. After that, particle sizes of the polymerized particles were graded by using a grading device. Then, by using hybridizer (Nara Machinery Co., Ltd.), the polymerized particles, external additive A (silica H2050, Wacker Ltd.) and external additive B (silica SS20, Japan Silica Ltd.) were set therein and treated at 4800 rpm for 5 minutes, so that the external additives were fixed on a surface of the polymerized particles to obtain the liquid powder.

The solid state properties of the liquid powder X and the liquid powder Y i.e. the above mentioned (1) average particle diameter and particle diameter distribution of the liquid powder, (2) ratio of apparent volume at maximum floating state of the liquid powder and apparent volume at none floating state ($V_{max}/V_0$), (3) time change of the apparent volume of the liquid powder ($V_{10}/V_5$), and (4) solvent insoluble rate of the liquid powder were shown as follows.

|  | Liquid powder X | Liquid powder Y |
|---|---|---|
| Liquid diameter ($\mu$m) | 3.3 | 3.1 |
| Liquid diameter distribution Span | 1.6 | 1.7 |
| $V_{max}/V_0$ | 3.1 | 3.2 |
| $V_{10}/V_5$ | 0.91 | 0.92 |
| Solvent insoluble rate (%) | 92 | 92 |

(Production of image display panel)

At first, a substrate with an electrode, to which the following partition wall was formed, was produced.

On a glass substrate to which indium oxide having a thickness of about 500 Å was arranged, a rib having a height of 250 $\mu$m was produced to form a partition wall having a stripe shape and a single lever construction.

The production of the rib was performed as follows. As an inorganic powder, a glass powder was prepared by melting, cooling and grinding a mixture of $SiO_2$, $Al_2O_3$, $B_2O_3$, $Bi_2O_3$, and ZnO. As a resin, epoxy resin having heat hardening property was prepared. Then, the glass powder and the epoxy resin were mixed with a solvent and controlled to be a viscosity of 15000 cps, so that a paste was produced.

Then, the paste was applied on a substrate and heated at 150°C to be hardened. By repeating the above paste applying and heating steps, a thickness (corresponding to a height of the partition wall) was controlled to be 200 $\mu$m (sand blasting method).

Then, a dry photo-resist was adhered. With respect to the adhered dry photo-resist, an exposing step and an etching step were performed so as to form a mask by which a partition wall pattern having a line of 50 $\mu$m, a space of 200 $\mu$m and a pitch of 250 $\mu$m can be formed.

Then, unnecessary portions were removed by a sandblast to form a predetermined partition wall having a stripe shape.

The liquid powder X was tentatively adhered to the glass substrate on which the indium oxide electrode is arranged by means of the electrostatic coating machine, and the liquid powder Y was tentatively adhered to another glass substrate. Then, the glass substrates were opposed with a spacing of 120 $\mu$m by using the spacer, and a periphery of the glass substrate is connected by means of epoxy adhesive agent, so that the display device, in which the liquid powder is sealed, was produced. The mixing ratio of the liquid powder X and the liquid powder Y was controlled to be even, and the filling rate of the liquid powder between the glass substrates was controlled to be 60 vol % as the volume occupied rate. Here, the gas surrounding the liquid powder in the gap between the substrates was an air having a relative humidity of 35% RH.

The thus obtained image display device had the display functions such as minimum drive voltage: 20 V, initial contrast ratio of reflection density at black color display / reflection density at white color display: 9.2 and response rate: 0.1 msec.

Moreover, the contrast ratio after 20000 times repetition was 8.37 (maintaining rate: 91 %) and the contrast ratio after 5 days left was 8.19 (maintaining rate: 89 %).

As to an amount of a transmitted light, a light beam was applied to a surface of the thus obtained image display panel from a light and a reflected light was measured by a luminance meter, so that a standard value (100 %) was defined by an amount of the reflected light at that time.

Example 12 (second embodiment: liquid powder)

The image display panel obtained in accordance with the reference example 12 was used as the display portion, and a glass transparent substrate having a refractive index $n_2$=1.49 was arranged on both surfaces. On one transparent substrate of the display panel, acryl base adhesive (produced by Soken Chemical & Engineering Co., Ltd., product name SK-DYNE 1831) was coated as the transparent elastic layer, and a polycarbonate protection window (thickness: 1.5 mm, refractive index $n_1$=1.59) was adhered on the coated surface as the optical function member, so that the image display device integrated with the optical function member was manufactured.

The thus formed transparent elastic layer had properties such as thickness: 0.5 mm, refractive index $n_0$=1.49, $G_0$=5.5×$10^6$ Pa and stress relaxation time: 12 seconds.

An amount of a transmitted light in this image display device integrated with the optical function member was 95 %, in the case that the reflected light amount of the reference example 12 was assumed to the standard value (100 %).

Comparative example 12 (second embodiment: liquid powder)

On the transparent substrate of the image display panel obtained in accordance with the reference example 12, the polycarbonate protection window as is the same as the example 12 was adhered through a spacer (height: 0.5 mm) by means of the known method, the image display device integrated with the optical function member was manufactured in which an air gap having a thickness of 0.5 mm was arranged between the transparent substrate of the image display panel and the polycarbonate protection window. An amount of a transmitted light in this image display device integrated with the optical function member was 87 %, in the case that the reflected light amount of the reference example 12 was assumed to the standard value (100 %).

(As to the third aspect of the invention)

The feature of the image display device according to the third aspect of the invention is to arrange an anti-reflection layer having two or more layers each indicating different refractive index on a surface of the transparent substrate i.e. outer surface or inner surface or both of outer surface and inner surface.

Since the anti-reflection layer has plural layers having different refractive index i.e. is constructed by stacking a high refraction material and a low refraction material alternately, it is possible to reduce an outer light reflection and transmit a light having a predetermined wavelength, so that a sharp image can be displayed.

The anti-reflection layer prevent a reflection of light having a wavelength of 380 - 780 nm, and it is preferred that a light reflectance is not greater than 10 % more preferably not greater than 8 %.

As the low refraction layer in the anti-reflection layer, use may be made of a conductive silicon carbide as a target and as the high refraction layer in the anti-reflection layer, use may be made of a conductive titanium oxide as a target, so that the sputtering process is performed preferably.

That is, since use is made of the conductive silicon carbide as the target, it is possible to apply a high power without being fractured. Moreover, since use is made of the conductive titanium oxide and the conductive silicon carbide as the target, a film forming rate can be made larger.

Moreover, it is preferred that the low refraction layer is formed by a silicon compound indicated by a group of $SiC_x$, $SiO_x$, $SiN_x$, $SiC_xO_y$, $SiC_xN_y$, $SiO_xN_y$, $SiC_xO_yN_z$, particularly $SiC_xO_y$ (here, x: 0.1 - 3 preferably 0.5 - 2.5, y: 0.1 - 3 preferably 0.5 - 2.5, z: 0.1 - 3 preferably 0.5 - 2.5). Further, it is preferred that the high refraction layer is formed by $TiO_t$ (here, t: 0.1 - 3 preferably 0.5 - 2.5).

A thickness and the number of stacking the low refraction layer and the high refraction layer are designed arbitrarily so as to achieve the desired property for the anti-reflection film. For example, the anti-reflection film for visible light can be obtained by stacking a first layer $SiC_xO_y$ of 15 nm, a second layer $TiO_t$ of 30 nm, a third layer of 125 nm and a fourth layer $TiO_t$ of 94.5 nm (here, x: 0.1 - 3, y: 0.1 - 3, t: 0.1 - 3). In this manner, even if a thickness of respective layers is different, the desired property can be arbitrarily achieved.

As the sputtering method, use may be preferably made of a magnetron sputtering method particularly a dual cathode magnetron sputtering method.

In this case, it is preferred that the low refraction layer is formed under a mixture gas atmosphere of an inert gas and a reactive gas, and as the reactive gas use may be made of a gas in which oxygen is included in its molecule.

During the sputtering operation, it is necessary not to form a sediment of the carbon compound in a vacuum chamber and not to include the carbon compound in the transparent conductive layer by making the carbon compound into gas and discharging the gas out of the vacuum chamber.

Sputtering conditions such as a kind of the gas to be supplied, a flow volume, a pressure, a power to be supplied, can be arbitrarily determined with reference to the target to be used, the film forming rate.

In this case, the conductive titanium oxide target means a target having a volume resistance of not greater than $2 \times 10^{-1}$ Ωcm, and the conductive silicon carbide target means a target having a volume resistance of not greater than $2 \times 10^{-2}$ Ωcm. If these conductive titanium oxide target and the conductive silicon carbide target are used, the film forming rate becomes larger.

As the silicon carbide target, use may be made of the substance obtained by firing a mixture of silicon carbide powders and nonmetallic firing aids (such as coal tar pitch, phenol resin, furan resin, epoxy resin, glucose, sucrose, cellulose, starchy). It is preferred to use the silicon carbide target having a density of not less than 2.9 g/cm$^3$. If use is made of the target having a high density and a uniform structure, it is possible to perform a stable discharge even if a high power is supplied during the sputtering, and thus it is possible to make the film forming rate larger.

In the case that use is made of the silicon carbide target, the carbon compound generated from the silicon carbide becomes gas in the vacuum chamber, and the gas is discharged out of the vacuum chamber. Therefore, there is an effect such that a sediment of the carbon compound is not formed in the vacuum chamber and the carbon compound is not included in the anti-reflection film during the sputtering operation.

Then, the third aspect of the invention will be explained in detail with reference to examples according to the invention and comparative examples. However, the present invention is not limited to the examples mentioned below.

<Embodiment of the third aspect of the invention>

Example 21 (first embodiment: particles)

(Production of anti-reflection film)

On a glass substrate, an anti-reflection layer having two low refraction layers formed by using the conductive silicon carbide as the target and two high refraction layers formed by using the conductive titanium oxide as the target was formed.

The film forming of the low refraction layer was performed by means of a magnetron sputtering apparatus as the sputtering apparatus using the conductive silicon carbide (produced by Bridgestone Corporation, resistance: $2 \times 10^{-2}$ Ωcm) as the target material under the sputtering conditions such as gas to be supplied: argon gas of 10 cc/min and oxygen gas of 3 cc/min, pressure: 5 mTorr, power to be supplied: 1.2 kW.

The film forming of the high refraction layer was performed by means of a magnetron sputtering apparatus as the sputtering apparatus using the conductive titanium oxide (produced by ASAHI GLASS CO., LTD., resistance: $2 \times 10^{-1}$ Ωcm) as the target material under the sputtering conditions such as gas to be supplied: argon gas of 10 cc/min, pressure: 5 mTorr, power to be supplied: 1.2 kW.

Composition, thickness of layer and film forming time of the thus obtained anti-reflection layer were as follows.

|  | Film composition | Film thickness (nm) | Film forming time (min) |
|---|---|---|---|
| First layer | $SiC_{0.8}O_{1.2}$ | 15.0 | 0.63 |
| Second layer | $TiO_{1.9}$ | 30.0 | 0.83 |
| Third layer | $SiC_{0.8}O_{1.2}$ | 125.0 | 5.21 |
| Fourth layer | $TiO_{1.9}$ | 94.5 | 2.63 |
|  |  | Total film forming time | 9.29 |

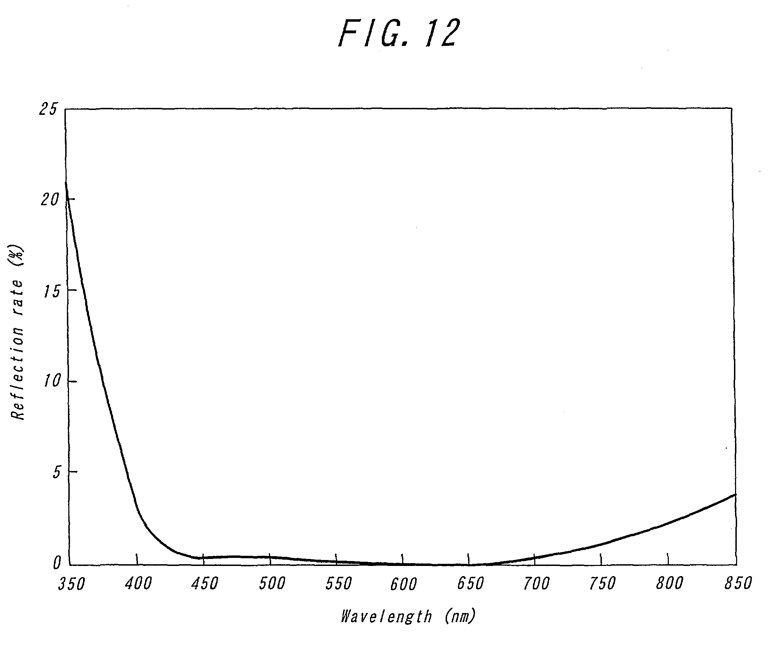

An optical performance of the produced anti-reflection layer was shown in Fig. 12.

(Production of image display device)

Then, an image display device having a glass substrate including the anti-reflection layer mentioned above was prepared. An epoxy substrate was employed as the opposed substrate, and the copper electrode was employed as the display electrode and the opposed electrode. In this case, on the surfaces of respective electrodes, an insulating silicon resin was coated with the thickness about 3 μm for the purpose of preventing an adhesion and a charge leakage. Black toners (spherical toners with average particle diameter of 8 μm, surface charge density of —50 μC/m$^2$, the surface potential of 450 V at 0.3 second after the foregoing surface potential measurement) for electro-photography were employed as the negatively chargeable particles. Polymerized particles of styrene-acrylic resin (spherical toners with average particle diameter of 8 μm, surface charge density of +45 μC/m$^2$, the surface potential of 500 V at 0.3 second after the foregoing surface potential measurement) produced by using titanium oxide as the white pigment and ammonium salt compound of fourth grade as the electric charge control agent were employed as the positively chargeable particles. For the purpose of charging the particles, an equivalent amount of both particles were mixed and agitated and frictional charging was conducted. Setting the height of the partition walls as 200 µm, the volume population of the particles among the space between the substrates was adjusted to 70 %.

When DC voltage of 200 V was applied in such a manner that the display electrode was a high potential and the opposed electrode was a low potential, the negatively chargeable particles flew and moved towards the display electrode, so that a white color was displayed on the image display element. Then, if the applied voltage was inversed, the negatively chargeable particles flew and moved towards the opposed electrode, so that a black color was displayed on the image display element.

The response time for the applied voltage was measured to be 1 msec. Even after leaving the display device cutting off the applied voltage for one day, each display was maintained.

Further, although the polarity of the applied voltage was reversed repeatedly for 10,000 times, there was almost no variation of the response rate.

Reference example 21 (first embodiment: particles)

In the example 21, an anti- reflection layer obtained by stacking alternately two low refraction layers using a silicon as the target and two high refraction layers using a titanium as the target was formed on the glass substrate.

The film forming of the low refraction layer was performed by means of a magnetron sputtering apparatus as the sputtering apparatus using Si as the target material under the sputtering conditions such as gas to be supplied: argon gas of 5 cc/min and oxygen gas of 5 cc/min, pressure: 5 mTorr, power to be supplied: 1.2 kW.

The film forming of the high refraction layer was performed by means of a magnetron sputtering apparatus as the sputtering apparatus using Ti as the target material under the sputtering conditions such as gas to be supplied: argon gas of 5 cc/min and oxygen gas of 5 cc/min,, pressure: 5 mTorr, power to be supplied: 1.2 kW.

The thicknesses of the low refraction layer and the high refraction layer were same as those of the example 21. The film forming time was as follows. That is, the first layer was 7.50 minutes, the second layer was 10.00 minutes, the third layer was 62.50 minutes, the fourth layer was 31.50 minutes and the total film forming time was 111.50 minutes.

In the image display device according to the invention, it is found from the example 21 that a rapid response rate and an excellent stability can be obtained and that, since the refraction index of the visible light is extremely low in the anti-reflection layer, a sharp image can be obtained.

Moreover, the film forming time of the reference example 21 takes about two hours, but the film forming time of the example 21 takes about 9.50 minutes to form the anti-reflection layer having four layers. Therefore, it is found that the anti-reflection layer can be formed in an extremely short time if use is made of the silicon carbide for the target of the low refraction layer and the titanium oxide for the target of the high refraction layer.

Then, as the second embodiment of the third aspect of the invention, the image display panel utilizing the liquid powders was examined. It should be noted that the physical properties of the liquid powders and the functions of the display device in examples and comparative examples according to the following third aspect of the invention were estimated in accordance with the same standard as those of the above-mentioned first aspect of the invention.

Example 22 (second embodiment: liquid powder)

(Production of anti-reflection film)

On a glass substrate, an anti-reflection layer having two low refraction layers formed by using the conductive silicon carbide as the target and two high refraction layers formed by using the conductive titanium oxide as the target was formed.

The film forming of the low refraction layer was performed by means of a magnetron sputtering apparatus as the sputtering apparatus using the conductive silicon carbide (produced by Bridgestone Corporation, resistance: $2 \times 10^{-2}$ Ωcm) as the target material under the sputtering conditions such as gas to be supplied: argon gas of 10 cc/min and oxygen gas of 3 cc/min, pressure: 5 mTorr, power to be supplied: 1.2 kW.

The film forming of the high refraction layer was performed by means of a magnetron sputtering apparatus as the sputtering apparatus using the conductive titanium oxide (produced by ASAHI GLASS CO., LTD., resistance: $2 \times 10^{-1}$ Ωcm) as the target material under the sputtering conditions such as gas to be supplied: argon gas of 10 cc/min, pressure: 5 mTorr, power to be supplied: 1.2 kW.

Composition, thickness of layer and film forming time of the thus obtained anti-reflection layer were as follows.

|  | Film composition | Film thickness (nm) | Film forming time (min) |
|---|---|---|---|
| First layer | $SiC_{0.8}O_{1.2}$ | 15.0 | 0.63 |

(continued)

|  | Film composition | Film thickness (nm) | Film forming time (min) |
|---|---|---|---|
| Second layer | $TiO_{1.9}$ | 30.0 | 0.83 |
| Third layer | $SiC_{0.8}O_{1.2}$ | 125.0 | 5.21 |
| Fourth layer | $TiO_{1.9}$ | 94.5 | 2.63 |
|  |  | Total film forming time | 9.29 |

An optical performance of the produced anti-reflection layer was shown in Fig. 12.

(Production of liquid powder)

Two kinds of the liquid powders (liquid powder X, liquid powder Y) were prepared.

The liquid powder X was produced as follows. At first, methyl methacrylate monomer, $TiO_2$ (20 phr), charge control agent bontron E89 (Orient Chemical Industries, Ltd.: 5 phr), initiator AIBN (0.5 phr) were suspended and polymerized. After that, particle sizes of the polymerized particles were graded by using a grading device. Then, by using hybridizer (Nara Machinery Co., Ltd.), the polymerized particles, external additive A (silica H2000/4, Wacker Ltd.) and external additive B (silica SS20, Japan Silica Ltd.) were set therein and treated at 4800 rpm for 5 minuets, so that the external additives were fixed on a surface of the polymerized particles to obtain the liquid powder.

The liquid powder Y was produced as follows. At first, styrene monomer, azo compounds (5 phr), charge control agent bontron N07 (Orient Chemical Industries, Ltd.: 5 phr), initiator AIBN (0.5 phr) were suspended and polymerized. After that, particle sizes of the polymerized particles were graded by using a grading device. Then, by using hybridizer (Nara Machinery Co., Ltd.), the polymerized particles, external additive A (silica H2050, Wacker Ltd.) and external additive B (silica SS20, Japan Silica Ltd.) were set therein and treated at 4800 rpm for 5 minutes, so that the external additives were fixed on a surface of the polymerized particles to obtain the liquid powder.

The solid state properties of the liquid powder X and the liquid powder Y i.e. the above mentioned (1) average particle diameter and particle diameter distribution of the liquid powder, (2) ratio of apparent volume at maximum floating state of the liquid powder and apparent volume at none floating state, (3) time change of the apparent volume of the liquid powder ($V_{10}/V_5$), and (4) solvent insoluble rate of the liquid powder were shown as follows.

|  | Liquid powder X | Liquid powder Y |
|---|---|---|
| Liquid diameter (μm) | 3.3 | 3.1 |
| Liquid diameter distribution Span | 1.6 | 1.7 |
| $V_{max}/V_0$ | 3.1 | 3.2 |
| $V_{10}/V_5$ | 0.91 | 0.92 |
| Solvent insoluble rate (%) | 92 | 92 |

(Production of image display device)

The image display device was manufactured by using a glass substrate having the anti-reflection layer mentioned above.

At first, a substrate with an electrode, to which the following partition wall was formed, was produced. On a glass substrate to which indium oxide having a thickness of about 500 Å was arranged, a rib having a height of 250 μm was produced to form a partition wall having a stripe shape and a single lever construction.

The production of the rib was performed as follows. As an inorganic powder, a glass powder was prepared by melting, cooling and grinding a mixture of $SiO_2$, $Al_2O_3$, $B_2O_3$, $Bi_2O_3$, and ZnO. As a resin, epoxy resin having heat hardening property was prepared. Then, the glass powder and the epoxy resin were mixed with a solvent and controlled to be a viscosity of 15000 cps, so that a paste was produced.

Then, the paste was applied on a substrate and heated at 150°C to be hardened. By repeating the above paste applying and heating steps, a thickness (corresponding to a height of the partition wall) was controlled to be 200 μm (sand blasting method).

Then, a dry photo-resist was adhered. With respect to the adhered dry photo-resist, an exposing step and an etching step were performed so as to form a mask by which a partition wall pattern having a line of 50 μm, a space of 200 μm and a pitch of 250 μm can be formed.

Then, unnecessary portions were removed by a sandblast to form a predetermined partition wall having a stripe shape.

The liquid powder X was tentatively adhered to the glass substrate on which the indium oxide electrode is arranged by means of the electrostatic coating machine, and the liquid powder Y was tentatively adhered to another glass substrate. Then, the glass substrates were opposed with a spacing of 120 µm by using the spacer, and a periphery of the glass substrate is connected by means of epoxy adhesive agent, so that the display device, in which the liquid powder is sealed, was produced. The mixing ratio of the liquid powder X and the liquid powder Y was controlled to be even, and the filling rate of the liquid powder between the glass substrates was controlled to be 60 vol % as the volume occupied rate. Here, the gas surrounding the liquid powder in the gap between the substrates was an air having a relative humidity of 35% RH.

The thus obtained image display device had the display functions such as minimum drive voltage: 20 V, initial contrast ratio of reflection density at black color display / reflection density at white color display: 9.2 and response rate: 0.1 msec.

Moreover, the contrast ratio after 20000 times repetition was 8.37 (maintaining rate: 91 %) and the contrast ratio after 5 days left was 8.19 (maintaining rate: 89 %).

Reference example 22 (second embodiment: liquid powder)

In the example 22, an anti- reflection layer obtained by stacking alternately two low refraction layers using a silicon as the target and two high refraction layers using a titanium as the target was formed on the glass substrate.

The film forming of the low refraction layer was performed by means of a magnetron sputtering apparatus as the sputtering apparatus using Si as the target under the sputtering conditions such as gas to be supplied: argon gas of 5 cc/min and oxygen gas of 5 cc/min, pressure: 5 mTorr, power to be supplied: 1.2 kW.

The film forming of the high refraction layer was performed by means of a magnetron sputtering apparatus as the sputtering apparatus using Ti as the target under the sputtering conditions such as gas to be supplied: argon gas of 5 cc/min and oxygen gas of 5 cc/min,, pressure: 5 mTorr, power to be supplied: 1.2 kW.

The thicknesses of the low refraction layer and the high refraction layer were same as those of the example 1. The film forming time was as follows. That is, the first layer was 7.50 minutes, the second layer was 10.00 minutes, the third layer was 62.50 minutes, the fourth layer was 31.50 minutes and the total film forming time was 111.50 minutes.

In the image display device according to the invention, it is found from the example 21 that a rapid response rate, a low driving voltage such as 20 V, a simple construction, an inexpensive cost and an excellent stability can be obtained and that, since the contrast ratio is high and the refraction index of the visible light is extremely low in the anti-reflection layer, a sharp image can be obtained.

Moreover, the film forming time of the reference example 22 takes about two hours, but the film forming time of the example 22 takes about 9.50 minutes to form the anti-reflection layer having four layers. Therefore, it is found that the anti-reflection layer can be formed in an extremely short time if use is made of the silicon carbide for the target of the low refraction layer and the titanium oxide for the target of the high refraction layer.

(As to the fourth aspect of the invention)

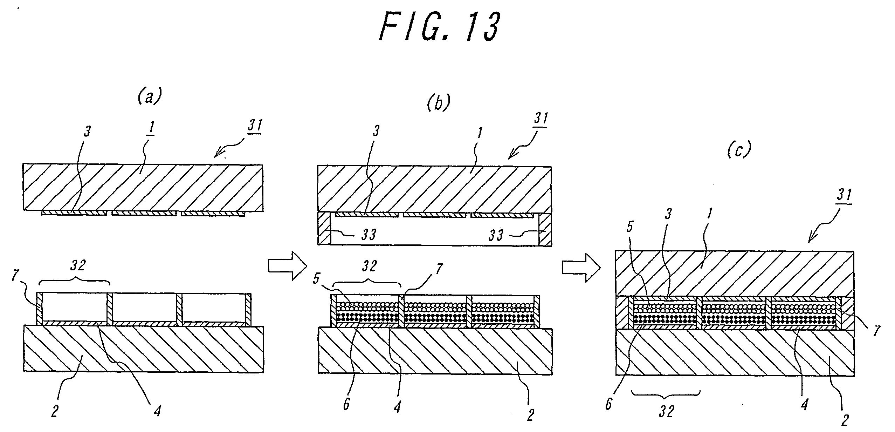

The feature of the image display device according to the fourth aspect of the invention is to connect the transparent substrate 1 and the opposed substrate 2 by using a thermosetting adhesive or a photo-curing adhesive in the image display panel having the structure mentioned above. With reference to Figs. 13a - 13c, the connection between the transparent substrate 1 and the opposed substrate 2 in the image display panel 31 of the image display device according to the invention will be explained specifically in detail as follows.

At first, two substrates are prepared. That is, as shown in Fig. 13a, the transparent substrate 1, on which the display electrode 3 is arranged, and the opposed substrate 2, on which the opposed electrode 4 is arranged, are prepared. The display electrode 3 is arranged correspondingly to respective image display elements 32, and a gap for setting the partition wall 7 is arranged between the display electrodes 3 and 3. In the same manner, the opposed electrode 4 is arranged corresponding to respective image display elements 32, and the partition wall 7 is arranged between the opposed electrodes 4 and 4.

Then, an adhesive for sealing is prepared, and a particle filling process and an adhesive coating process are performed. At first, as the adhesive, the thermosetting adhesive or the photo-curing adhesive, preferably, an adhesive including one of more groups of compounds having one of glycidyl group, actylic group and methacrylic group is prepared. If the adhesive is the thermo-setting adhesive or the photo-curing adhesive, any known adhesives may be used. As a preferred example, the adhesive for sealing, in which 40 parts by weight of neopenthyl glycol methacrylate and 2 parts by weight of benzoil peroxide are added with respect to 100 parts by weight of TO-SO EVA uletrasen UE750R, is prepared. Then, as shown in Fig. 13b, the negatively chargeable particles 5 with a white color and the positively chargeable particles 6 with a black color are filled in a space constituting the image display element 32 between the partition walls 7, and the thus prepared adhesive 33 is coated to a frame portion defined at a periphery of the transparent substrate 1 by means of a dispenser.

Finally, a setting process of the two substrates and a hardening process of the adhesive for sealing by a heat or a light irradiation are performed. That is, as shown in Fig. 13c, the setting is performed by adhering the transparent substrate 1 and the opposed substrate 2 via the adhesive 33. Then, heat or light is applied to the setted substrates in accordance with a type of the adhesive 33 (as one example, in the case of the adhesive having the composition mentioned above, heating at 130 °C for 10 minutes) so as to harden the adhesive for sealing. The image display panel 31 is obtained by performing the processes mentioned above.

In the embodiments shown in Figs. 13a - 13c, three image display elements 32 are arranged in a cross section shown in these figures, but it is a matter of course that the number is not limited to three. Moreover, in the embodiment mentioned above, the image display panel having the construction shown in Fig. 8, in which the display electrode 3 is arranged to the transparent substrate 1 and the opposed electrode 4 is arranged to the opposed substrate 2, is explained, but it is apparent that the same effects can be obtained by the image display panel having the construction shown in Fig. 7, in which the display electrode 3 and the opposed substrate 4 are arranged to the opposed substrate 2.

(As to the fifth aspect of the invention)

The feature of the image display device according to the fifth aspect of the invention is to form one or more image display elements by using a partition wall 7 arranged between the transparent substrate 1 and the opposed substrate 2 and to use the partition wall 7 having such a shape that the bottom width wb at a side of the opposed substrate 2 is larger than the top width wt at a side of the transparent substrate 1.

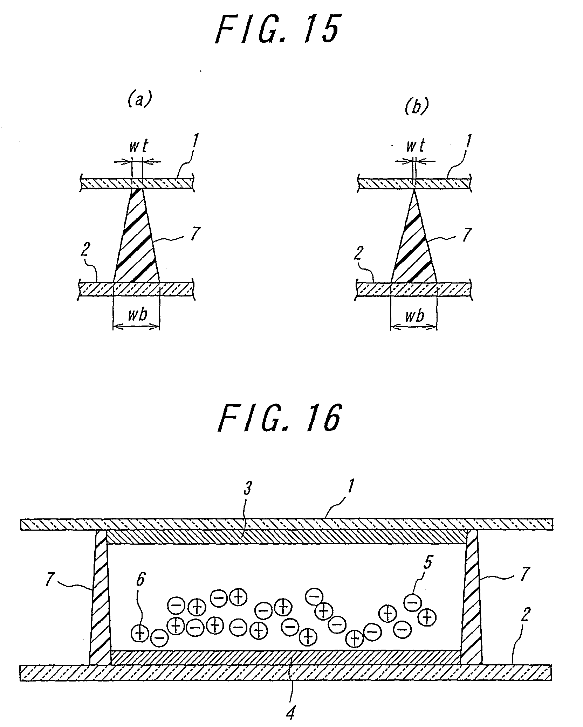

Figs. 15a and 15b are longitudinal cross sectional views respectively showing one embodiment of a shape of the partition wall 7 used in the image display device according to the invention. Normally, as shown in Fig. 15a, use is made of a trapezoidal shape in a cross section such that the bottom width wb at a side of the opposed substrate 2 is larger than the head width wt, preferably, such that a ratio wt/wb between the top width wt and the bottom width wb is not greater than 0.5. However, as shown in Fig. 15b, use may be made of the partition wall having a shape such that the top width wt is substantially 0 and a cross section is substantially a triangular shape. If the ratio becomes near 0, the top width wt becomes near 0. In this case, it is possible to improve a particle elimination effect and a display area increase effect.

However, if it is too excess, a connection between the transparent substrate 1 and the partition wall 7 is sometimes insufficient. Therefore, it is necessary to determine the top width wt with taking the connection state into consideration.

If the shape of the partition wall 7 is suitably selected in this manner, it is possible to make an opening rate of the transparent substrate 1 larger and to make the display area larger, as compared with the known image display device in which a cross section of the partition wall 7 is a rectangular shape and the top width wt of the partition wall 7 at a side of the transparent substrate 1 is equal to the bottom width wb of the partition wall at a side of the opposed substrate 2. Moreover, when the particles are filled in the space of the image display element surrounded by the partition wall 7, it is possible to make an opening rate of the space larger. In addition, since a flat portion at the top width wt is small, it is possible to decrease the residual particles on the flat portion mentioned above. Therefore, it is not necessary to remove the residual particles from the flat portion at the top width wt and thus the particle handling during the image display device manufacturing can be made simple.

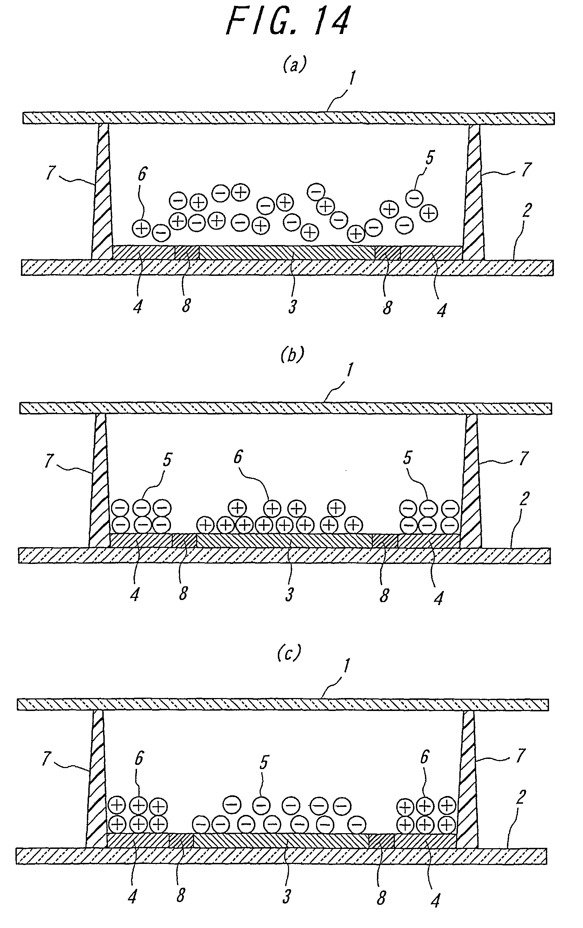

The specific embodiments of the fifth aspect of the invention are shown in Figs. 14a - 14c and Fig. 16. The features of the embodiments are to optimize the shape of the partition wall 7. In the reversible image display device according to the invention shown in Figs. 14a - 14c, the negatively chargeable particles 5 and the positively chargeable particles are arranged between the transparent substrate 1 and the opposed substrate 2. Under such a condition, when a voltage is applied from a power source in such a manner that a potential difference is generated between a side of the display electrode 3 and a side of the opposed electrode 4, the positively chargeable particles 6 move to the side of the display electrode 3 and the negatively chargeable particles 5 move to the side of the opposed electrode 4 by means of Coulomb's force. In this case, a display face viewed from a side of the transparent substrate 1 looks like a color of the positively chargeable particles 6 as shown in Fig. 14b. Next, when a voltage is applied in such a manner that an inverse potential difference is generated between the side of the display electrode 3 and the side of the opposed electrode 4 , the negatively chargeable particles 5 move to the side of the display electrode 3 and the positively chargeable particles 6 move to the side of the opposed electrode 4 by means of Coulomb's force as shown in Fig. 14c. In this case, the display face viewed from the side of the transparent substrate 1 looks like a color of the negatively chargeable particles 5.

The display states shown in Figs. 14b and 14c are repeatedly changeable only by reversing the potentials of the power source, and thus it is possible to change colors on the display face reversibly by reversing the potentials of the power source as mentioned above. For example, when the negatively chargeable particles 5 are white color and the positively chargeable particles 6 are black color, or, when the negatively chargeable particles 5 are black color and the positively chargeable particles 5 are white color, a reversible image display between white color and black color can be performed. In this method according to the invention, since the particles are once adhered to the electrode by means of an imaging force, a display image can be maintained for a long time after a voltage apply is stopped, thereby showing an excellent memory property.

In the embodiment shown in Figs. 14a - 14c, the electrodes are arranged in such a manner that both of the display electrode 3 and the opposed electrode 4 having a different potential are arrange to the opposed substrate 2 which is opposed to the transparent substrate 1. As the other electrode arranging method, there is a method such that the display electrode 3 is arranged to the transparent substrate 1 and the opposed electrode 4 is arranged to the opposed substrate 2 as shown in Fig. 16. In this case, it is necessary to use a transparent electrode as the display electrode 3. In the embodiment shown in Figs. 14a - 14c, since both of the display electrode 3 and the opposed substrate 4 can be formed by an opaque electrode, it is possible to use an inexpensive and a low resistance metal electrode such as copper, aluminum and so on.

In this case, the applied outer voltage may be superimposed with a direct current or an alternate current. On the surfaces of respective electrodes, an insulating silicon resin may be coated for the purpose of preventing an adhesion and a charge leakage. As the coating layer, use is made of a positively chargeable resin for the negatively chargeable particles and a negatively chargeable resin for the positively chargeable particles since a charge of the particles is easy to discharge.

It should be noted that, the explanation is made to a case utilizing the particles, but the same explanation can be applied to a case utilizing the liquid powders.

Then, the fifth aspect of the invention will be explained in detail with reference to examples according to the invention and comparative examples. However, the present invention is not limited to the examples mentioned below.

<Embodiment of the fifth aspect of the invention>

Example 41 (first embodiment: particles)

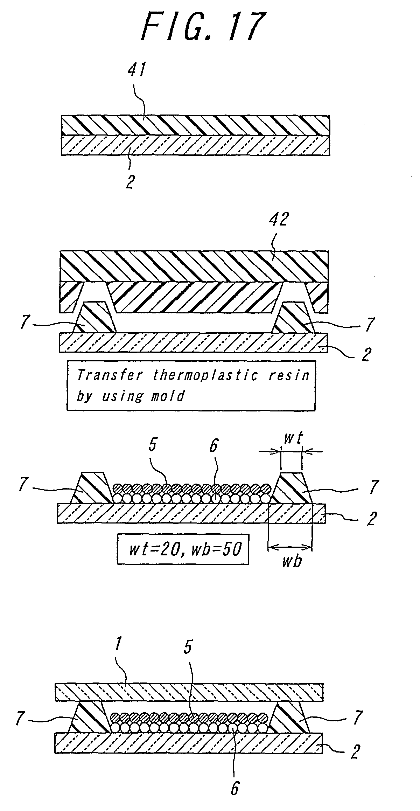

As shown in Fig. 17, a polycarbonate 41 was stacked on the opposed substrate 2 and then a die was transferred by using a mold 42 to form a partition wall structure. The bottom width of the partition wall 7 was larger than the top width. The particles 5, 6 were filled in the partition wall structure by means of a scattering method. Normally, before connecting the transparent substrate 1, it was necessary to remove the residual particles from a tip of the partition wall 7. However, in the present invention, since the tip of the partition wall 7 was narrow, it was possible to remove the particles 5, 6 easily. After filling the particles in the partition wall structure, a positioning between the transparent substrate 1 and the opposed substrate 2 was performed. Then, a sealing agent was applied between the transparent substrate 1 and the partition wall 7, and the transparent substrate 1 and the partition wall 7 were adhered so as to connect them. As a result, it was possible to obtain the image display device in which the display area was rather large and a connection property between the transparent substrate 1 and the partition wall 7 was excellent.

Example 42 (first embodiment: particles)

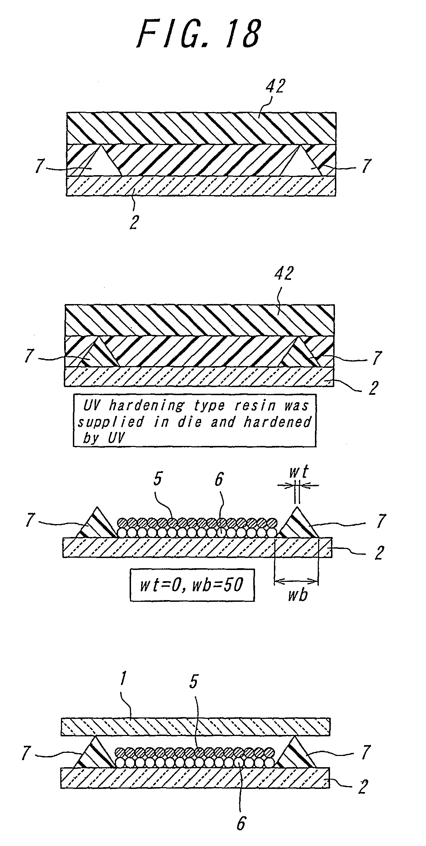

As shown in Fig. 18, the mold 42 was pressed to the opposed substrate 2 and an acrylic resin of UV hardening type was supplied. UV with a power of 1000 mJ/cm$^2$ was irradiated from a side of the opposed substrate 2 (glass substrate) and the resin was hardened, so that the partition wall structure was formed. The bottom width of the partition wall 7 was still larger than the top width as compared with the example 41. The particles 5, 6 were filled in the partition wall structure by means of a scattering method. Normally, before connecting the transparent substrate 1, it was necessary to remove the residual particles from a tip of the partition wall 7. However, in the present invention, since the tip of the partition wall 7 was narrow, it was possible to remove the particles 5, 6 easily. After filling the particles in the partition wall structure, a positioning between the transparent substrate 1 and the opposed substrate 2 was performed. Then, a sealing agent was applied between the transparent substrate 1 and the partition wall 7, and the transparent substrate 1 and the partition wall 7 were adhered so as to connect them. As a result, it was possible to obtain the image display device in which the display area was extremely large and a connection property between the transparent substrate 1 and the partition wall 7 was rather excellent.

Comparative example 41 (first embodiment: particles)

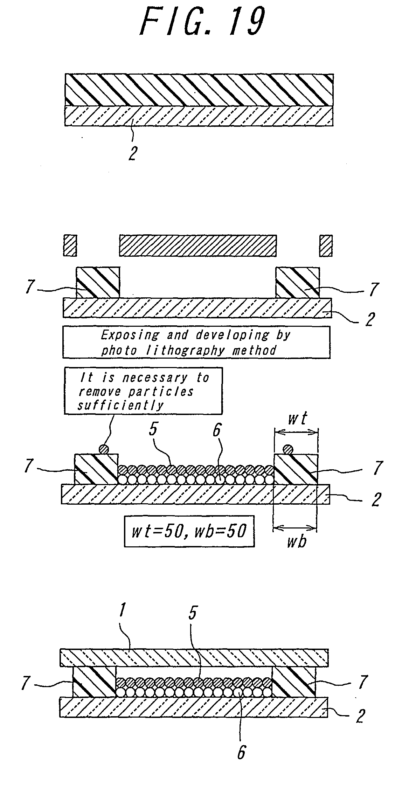

As shown in Fig. 19, the partition wall structure was formed by performing an exposing process and a developing process according to a photo lithography method. The particles 5, 6 were filled in the partition wall structure by means of a scattering method. Normally, before connecting the transparent substrate 1, it was necessary to remove the residual particles from a tip of the partition wall 7. However, in this comparative example, since the tip of the partition wall 7 was wide, it was necessary to remove the particles 5, 6 and thus there was a drawback such that the process became complicated.

Then, as the second embodiment of the fifth aspect of the invention, the image display panel utilizing the liquid powders was examined.

Example 43 (second embodiment: liquid powder)

As shown in Fig. 17, a polycarbonate 41 was stacked on the opposed substrate 2 and then a die was transferred by using a mold 42 to form a partition wall structure. The bottom width of the partition wall 7 was larger than the top width. The liquid powders 5, 6 were filled in the partition wall structure by means of a scattering method. Normally, before connecting the transparent substrate 1, it was necessary to remove the residual liquid powders from a tip of the partition wall 7. However, in the present invention, since the tip of the partition wall 7 was narrow, it was possible to remove the liquid powders 5, 6 easily. After filling the liquid powders in the partition wall structure, a positioning between the transparent substrate 1 and the opposed substrate 2 was performed. Then, a sealing agent was applied between the transparent substrate 1 and the partition wall 7, and the transparent substrate 1 and the partition wall 7 were adhered so as to connect them. As a result, it was possible to obtain the image display device in which the display area was rather large and a connection property between the transparent substrate 1 and the partition wall 7 was excellent.

Example 44 (second embodiment: liquid powders)

As shown in Fig. 18, the mold 42 was pressed to the opposed substrate 2 and an acrylic resin of UV hardening type was supplied. UV with a power of 1000 mJ/cm$^2$ was irradiated from a side of the opposed substrate 2 (glass substrate) and the resin was hardened, so that the partition wall structure was formed. The bottom width of the partition wall 7 was still larger than the top width as compared with the example 43. The liquid powders 5, 6 were filled in the partition wall structure by means of a scattering method. Normally, before connecting the transparent substrate 1, it was necessary to remove the residual liquid powders from a tip of the partition wall 7. However, in the present invention, since the tip of the partition wall 7 was narrow, it was possible to remove the liquid powders 5, 6 easily. After filling the particles in the partition wall structure, a positioning between the transparent substrate 1 and the opposed substrate 2 was performed. Then, a sealing agent was applied between the transparent substrate 1 and the partition wall 7, and the transparent substrate 1 and the partition wall 7 were adhered so as to connect them. As a result, it was possible to obtain the image display device in which the display area was extremely large and a connection property between the transparent substrate 1 and the partition wall 7 was rather excellent.

Comparative example 42 (second embodiment: liquid powders)

As shown in Fig. 19, the partition wall structure was formed by performing an exposing process and a developing process according to a photo lithography method. The liquid powders 5, 6 were filled in the partition wall structure by means of a scattering method. Normally, before connecting the transparent substrate 1, it was necessary to remove the residual liquid powders from a tip of the partition wall 7. However, in this comparative example, since the tip of the partition wall 7 was wide, it was necessary to remove the liquid powders 5, 6 and thus there was a drawback such that the process became complicated.

(As to the sixth aspect of the invention)

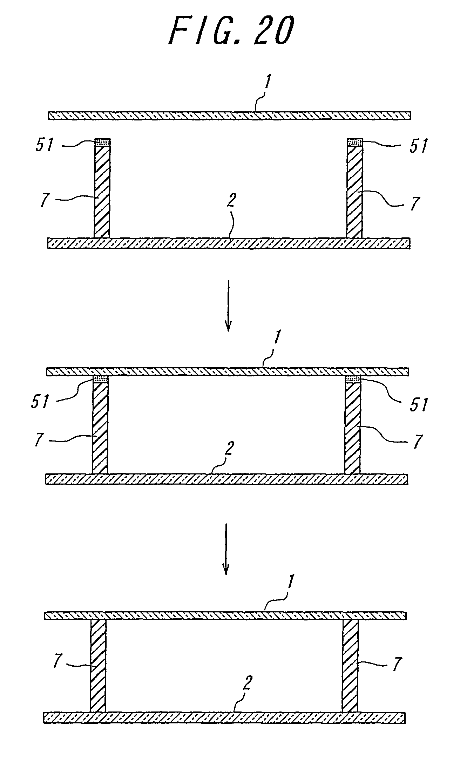

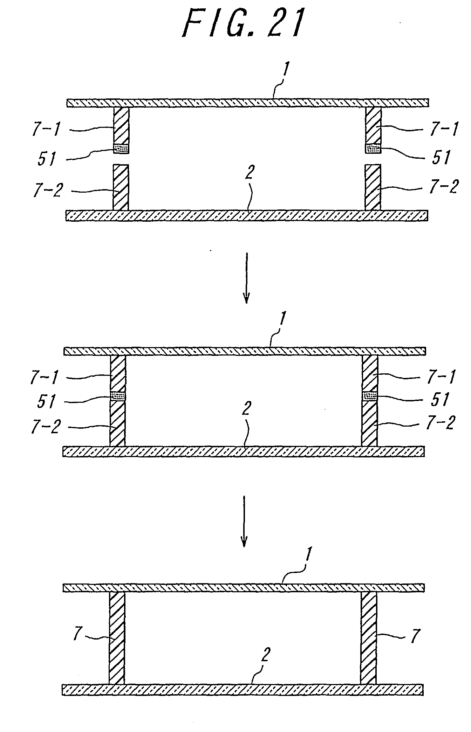

The feature of the method of manufacturing the image display device according to the invention is to improve a method of forming the partition wall 7 constituting the image display element during the manufacturing of the image display device having the construction mentioned above. That is, as shown in fig. 20, an adhesive 51 is arranged on a tip of the partition wall 7 formed on the opposed substrate 2, and the partition wall 7 and the transparent substrate 1 are fixed through the adhesive 51, so that the image display element is formed between the transparent substrate 1 and the opposed substrate 2 by means of the partition wall 7. Or, as shown in Fig. 20, partition walls 7-1, 7-2 are arranged on the transparent substrate 1 and the opposed substrate 2 respectively, and the adhesive 51 is arranged on a tip of one partition wall i.e. here on a tip of the partition wall 7-1. Then, the partition walls 7-1, 7-2 are fixed through the adhesive 51 and the image display element is formed between the transparent substrate 1 and the opposed substrate 22 by means of the partition wall 7. It should be noted that, in the embodiments shown in Figs. 20 and 21, the negatively chargeable particles 5, the positively chargeable particles 6 and the electrodes 3, 4 are omitted for the simplicity of explanations, but these members are existent in an actual case. Moreover, the same explanation can be applied for the liquid powders.

By forming the partition wall 7 in this manner, it is possible to form the partition wall 7 firmly between the transparent substrate 1 and the opposed substrate 2 and to seal a predetermined amount of the particles completely in the space constituting the image display element under a condition such that the leakage of the particles is inhibited.

Then, the sixth aspect of the invention will be explained in detail with reference to examples according to the invention and comparative examples. However, the present invention is not limited to the examples mentioned below.

<Embodiment of the sixth aspect of the invention>

Example 51 (first embodiment: particles)

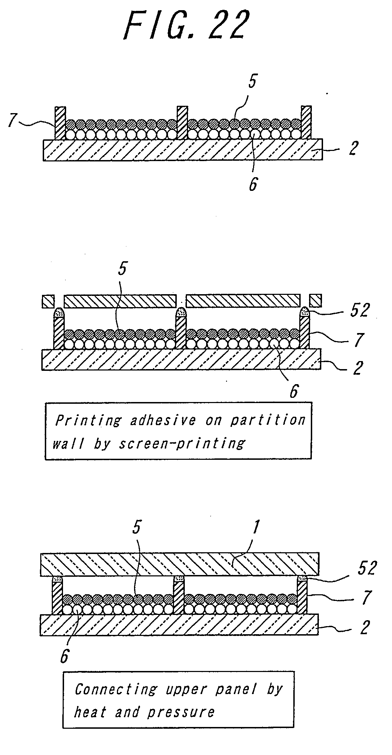

As shown in Fig. 22, the partition wall 7 was arranged on the opposed substrate 2, and the negatively chargeable particles 5 and the positively chargeable particles 6 were filled in the space constituting the image display element formed between the partition walls 7. Under such a condition, a thermosetting adhesive 52 was screen-printed on a tip of the partition wall 7, and the transparent substrate 1 was positioned with respect to the opposed substrate 2. Then, a heat and a pressure were applied thereto at 110 °C × 20 minutes × 0.1 MPa, and the partition wall 7 and the transparent substrate 1 were connected through the adhesive 52. As the thermosetting adhesive 12, use was made of the adhesion of radical polymerization type in which the organic peroxide was added. Then, the display properties at the initial condition and after 50 million repetition condition were measured and estimated. The estimation was performed in such a manner that OD values when a voltage applied to the image display device were measured by the optical densitometer and a difference between maximum OD value and minimum OD value was assumed as the contrast ratio. The results were shown in the following Table 4.

Example 52 (first embodiment: particles)

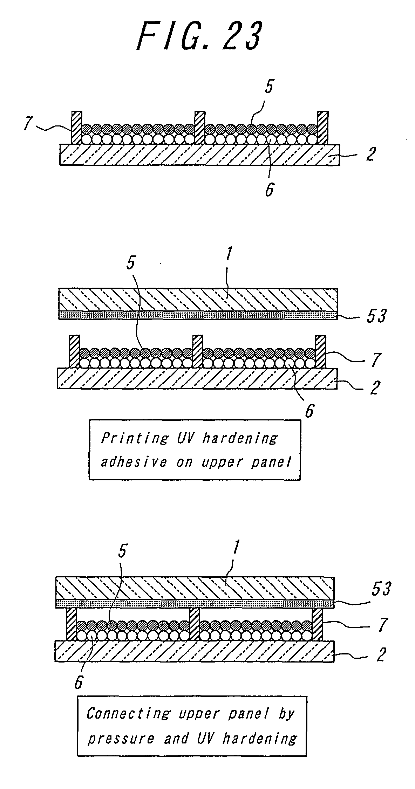

As shown in Fig. 23, the partition wall 7 was arranged on the opposed substrate 2, and the negatively chargeable particles 5 and the positively chargeable particles 6 were filled in the space constituting the image display element formed between the partition walls 7. Under such a condition, a UV hardening adhesive 53 was laminated on an overall surface of the transparent substrate 1 to which the opposed substrate 2 was opposed, and the transparent substrate 1 was positioned with respect to the opposed substrate 2. Then, UV having a power of 1000 mJ/cm$^2$ was irradiated thereto, and the partition wall 7 and the transparent substrate 1 were connected through the adhesive 53. Then, the display properties at the initial condition and after 50 million repetition condition were measured and estimated in the same manner as those of the example 51. The results were shown in the following Table 4.

Comparative example 51 (first embodiment: particles)

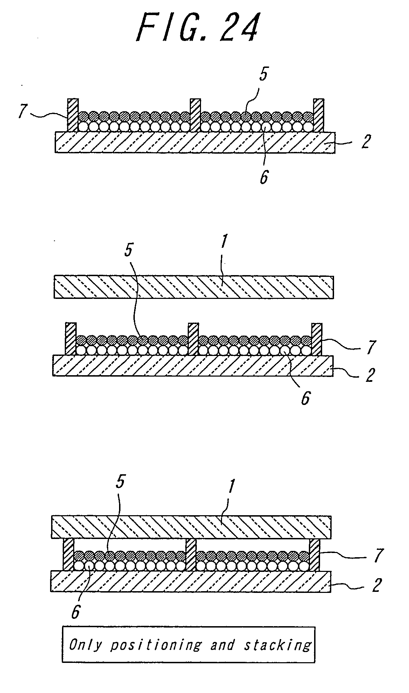

As shown in Fig. 24, the partition wall 7 was arranged on the opposed substrate 2, and the negatively chargeable particles 5 and the positively chargeable particles 6 were filled in the space constituting the image display element formed between the partition walls 7. Under such a condition, the adhesive was not arranged to the partition wall, and only the positioning between the transparent substrate 1 and the opposed substrate 2 was performed. Then, the transparent substrate 1 and the opposed substrate 2 were stacked and connected in such a manner that the sealing agent was arranged at corner portions of the transparent substrate 1 and the partition wall 7. Then, the display properties at the initial condition and after 50 million repetition condition were measured and estimated in the same manner as those of the example 51. The results were shown in the following Table 4.

Table 4

|  | Initial display property | Display property after 50 million times display |
|---|---|---|
| Example 51 | 15 | 13 |
| Example 52 | 13 | 12 |
| Comparative Example 51 | 14 | 3 |

From the results shown in Table 4, in the examples 51, 52 according to the manufacturing method of the present invention, a contrast deterioration was not detected at all. Contrary to this, in the comparative example 51 according to the known manufacturing method, since the particles were moved between the image display elements, an extraordinarily display deterioration was detected.

Then, as the second embodiment of the sixth aspect of the invention, the image display panel utilizing the liquid powders was examined.

Example 53 (second embodiment: liquid powder)

As shown in Fig. 22, the partition wall 7 was arranged on the opposed substrate 2, and the negatively chargeable liquid powders 5 and the positively chargeable liquid powders 6 were filled in the space constituting the image display element formed between the partition walls 7. Under such a condition, a thermosetting adhesive 52 was screen-printed on a tip of the partition wall 7, and the transparent substrate 1 was positioned with respect to the opposed substrate 2. Then, a heat and a pressure were applied thereto at 110 °C $\times$ 20 minutes $\times$ 0.1 MPa, and the partition wall 7 and the transparent substrate 1 were connected through the adhesive 52. As the thermosetting adhesive 12, use was made of the adhesion of radical polymerization type in which the organic peroxide was added. Then, the display properties at the initial condition and after 50 million repetition condition were measured and estimated. The estimation was performed in such a manner that OD values when a voltage applied to the image display device were measured by the optical densitometer and a difference between maximum OD value and minimum OD value was assumed as the contrast ratio. The results were shown in the following Table 5.

Example 54 (second embodiment: liquid powder)

As shown in Fig. 23, the partition wall 7 was arranged on the opposed substrate 2, and the negatively chargeable liquid powders 5 and the positively chargeable liquid powders 6 were filled in the space constituting the image display element formed between the partition walls 7. Under such a condition, a UV hardening adhesive 53 was laminated on an overall surface of the transparent substrate 1 to which the opposed substrate 2 was opposed, and the transparent substrate 1 was positioned with respect to the opposed substrate 2. Then, UV having a power of 1000 mJ/cm$^2$ was irradiated thereto, and the partition wall 7 and the transparent substrate 1 were connected through the adhesive 53. Then, the display properties at the initial condition and after 50 million repetition condition were measured and estimated in the same manner as those of the example 53. The results were shown in the following Table 5.

Comparative example 52 (second embodiment: liquid powder)

As shown in Fig. 24, the partition wall 7 was arranged on the opposed substrate 2, and the negatively chargeable liquid powders 5 and the positively chargeable liquid powders 6 were filled in the space constituting the image display element formed between the partition walls 7. Under such a condition, the adhesive was not arranged to the partition wall, and only the positioning between the transparent substrate 1 and the opposed substrate 2 was performed. Then, the transparent substrate 1 and the opposed substrate 2 were stacked and connected in such a manner that the sealing agent was arranged at corner portions of the transparent substrate 1 and the partition wall 7. Then, the display properties at the initial condition and after 50 million repetition condition were measured and estimated in the same manner as those of the example 53. The results were shown in the following Table 5.

Table 5

| | Initial display property | Display property after 50 million times display |
|---|---|---|
| Example 53 | 16 | 14 |
| Example 54 | 15 | 13 |
| Comparative Example 52 | 15 | 3 |

From the results shown in Table 5, in the examples 53, 54 according to the manufacturing method of the present invention, a contrast deterioration was not detected at all. Contrary to this, in the comparative example 52 according to the known manufacturing method, since the particles were moved between the image display elements, an extraordinarily display deterioration was detected.

Industrially applicability

It is clearly understood from the above explanations, in the image display device according to the first aspect of the invention, rapid response rate, simple construction, inexpensive cost and excellent stability can be achieved. In addition, since the anisotropic conductive film is used for connecting the member such as electrode for transmitting the signal, which is supplied to the circuits for the image display, and the substrate; the member such as the electrode can be provided to the substrate at a low temperature for a short time, and an affection for the substrate in the case of providing the electrode an so on an be minimized, so that the image display device having excellent properties can be manufactured effectively.

Moreover, in the image display device according to the second aspect of the invention, rapid response rate, simple construction, inexpensive cost and excellent stability can be achieved. In addition, since the image display panel and the optical function member are integrated through a transparent elastic layer, it is possible to certainly prevent the decrease of contrast ratio, the distortion of display screen, the color shading and so on, and thus the sharp image can be obtained.

Further, in the image display device according to the third aspect of the invention, rapid response rate, simple construction, inexpensive cost and excellent stability can be achieved. In addition, since the outer light reflection can be inhibited, it is possible to obtain the high contrast and sharp image.

Furthermore, since the conductive silicon carbide is used as the target for the low refraction layer and the conductive titanium oxide is used as the target for the high refraction layer, it is possible to form the anti-reflection layer for an extremely short time, and the anti-reflection film can be produced easily.

Moreover, in the image display device according to the fourth aspect of the invention, since two substrates i. e. a transparent substrate and an opposed substrate are connected by using the thermosetting adhesive or the photo-curing adhesive, it is possible to harden the adhesive in a short time by applying a heat or irradiating a light after setting two substrates through the adhesive at a predetermined position. As a result, it is possible to prevent the positional deviation between the substrates and the leakage of the particles. Moreover, it is possible to achieve the high image display accuracy of the image display panel.

Further, in the image display device according to the fifth aspect of the invention, since the partition wall has such a shape that the bottom width wb at a side of the opposed substrate is larger than the top width wt at a side of the transparent substrate, it is possible to decrease a portion of the partition wall to which the transparent substrate is contacted and to increase a display area. In addition, when the particles are filled in the image display elements each surrounded by the partition wall, it is possible to decrease the particles remained on the head portion of the partition wall and to achieve the simple handling of the particles during the manufacturing.

Furthermore, in the method of manufacturing the image display device according to the sixth aspect of the invention, since the improvement comprises the steps of: forming the partition wall on one or both of a transparent substrate and an opposed substrate; arranging an adhesive at a tip of the partition wall; and connecting the partition wall and the other substrate or both partition walls through the adhesive, it is possible to achieve a strong connection between the partition wall and the substrate or a strong connection between the substrates and to prevent a leakage of the particles almost completely.

**Claims**

1. An image display device, in which one or more groups of particles are sealed between opposed two substrates, at least one of two substrates being transparent, and, in which the particles, to which an electrostatic field is applied, are made to move so as to display an image, **characterized in that** a member for transmitting a signal, which is supplied to circuits for an image display, is provided to the substrate by means of an anisotropic conductive film.

2. The image display device according to claim 1, wherein the anisotropic conductive film is formed by scattering conductive particles in a thermosetting adhesive or a photo-curing adhesive.

3. The image display device according to claim 2, wherein a diameter of the conductive particles scattered in the thermosetting adhesive or the photo-curing adhesive is 0.1 - 20 $\mu$m.

4. The image display device according to claim 2 or 3, wherein the thermosetting adhesive or the photo-curing adhesive includes one or more groups of compounds having one of glycidyl group, acrylic group and methacrylic group.

5. An image display device which comprises an image display panel and an optical function member, in which one or more groups of particles are sealed between opposed two substrates, at least one of two substrates being transparent, and, in which the particles, to which an electrostatic field produced by two groups of electrodes having different potentials is applied, are made to move so as to display an image, **characterized in that** the image display panel and the optical function member are integrated through a transparent elastic layer.

6. The image display device according to claim 5, wherein, when it is assumed that a refractive index of the transparent elastic layer is $n_0$, a refractive index of the optical function member is $n_1$ and a refractive index of the transparent

substrate is $n_2$, an absolute of a difference between $n_0$ and $n_1$ and an absolute of a difference between $n_0$ and $n_2$ are not greater than 0.2 respectively.

7. The image display device according to claim 5 or 6, wherein the transparent elastic layer has a property such that, when it is assumed that a strain ($\varepsilon_0$) at 25 °C of a stress relaxation is 5 % and an initial value (after 0.05 sec) of a stress relaxation elastic modulus is $G_0$, $G_0$ is not greater than $6.5 \times 10^6$ Pa, and, a property such that a stress relaxation time $\tau$ calculated on the basis of a formula:

$$\ln G(t) = - t/\tau + \ln G_0$$

showing a relation between a stress relaxation elastic modulus G and a time t (sec) obtained from a damping curve of the relaxation elastic modulus, is not greater than 17 sec.

8. An image display device, in which one or more groups of particles are sealed between opposed two substrates, at least one of two substrates being transparent, and, in which the particles, to which an electrostatic field produced by two groups of electrodes having different potentials is applied, are made to move so as to display an image, **characterized in that** an anti-reflection layer having plural layers each indicating different refractive index is arranged on a surface of the transparent substrate.

9. The image display device according to claim 8, wherein the anti-reflection layer is constructed by stacking a low refraction layer produced by a sputtering process using a conductive silicon carbide as a target and a high refraction layer produced by a sputtering process using a conductive titanium oxide as a target.

10. The image display device according to claim 8 or 9, wherein the anti-reflection layer prevents a light reflection of which wavelength is 380 - 780 nm and a light reflection rate is not greater than 10 %.

11. An image display device which comprises an image display panel, in which two or more groups of particles having different colors and different charge characteristics are sealed between opposed two substrates, at least one of two substrates being transparent, and, in which the particles, to which an electrostatic field produced by a pair of electrodes arranged on one substrate or both substrates is applied, are made to move so as to display an image, **characterized in that** two substrates of the image display panel are connected by using a thermosetting adhesive or a photo-curing adhesive.

12. The image display device according to claim 11, wherein the thermosetting adhesive or the photo-curing adhesive includes one or more groups of compounds having one of glycidyl group, acrylic group and methacrylic group.

13. An image display device which comprises an image display panel, in which two or more groups of particles having different colors and different characteristics are sealed between opposed two substrates, at least one of two substrates being transparent, and, in which the particles, to which an electrostatic field produced by two groups of electrodes having different potentials is applied, are made to move so as to display an image, **characterized in that** one or more image display elements are formed by using a partition wall and the partition wall has such a shape that a bottom width wb at a side of an opposed substrate is larger than a top width wt at a side of a transparent substrate.

14. The image display device according to claim 13, wherein a ratio wt/wb between the bottom width wb at a side of the opposed substrate and the top width wt at a side of the transparent substrate is not greater than 0.5.

15. The image display device according to claim 13 or 14, wherein a color of the particles is white or black.

16. The image display device according to one of claims 1 - 15, wherein an average particle diameter of the particles is 0.1 - 50 μm.

17. The image display device according to one of claims 1 - 16, wherein the difference of a surface charge density in an absolute value between two groups of the particles measured by using the same kind of carrier in accordance with a blow-off method is 5 - 150 μC/m$^2$.

18. The image display device according to one of claims 1 - 17, wherein the particles are particles in which the maximum surface potential, in the case that the surface of particles is charged by a generation of Corona discharge caused by applying a voltage of 8 KV to a Corona discharge device deployed at a distance of 1 mm from the surface of the particles, is greater than 300 V at 0.3 second after the Corona discharge.

19. A method of manufacturing an image display device which comprises an image display panel, in which two or more groups of particles having different colors and different characteristics are sealed between opposed one substrate, at least one of two substrates being transparent, in which the particles, to which an electrostatic field produced by two groups of electrodes having different potentials is applied, are made to move so as to display an image, and, in which one or more image display elements are formed by using a partition wall, **characterized in that** the improvement comprises the steps of: forming the partition wall on one or both of a transparent substrate and an opposed substrate; arranging an adhesive at a tip of the partition wall; and connecting the partition wall and the other substrate or both partition walls through the adhesive.

20. The method of manufacturing the image display device according to claim 19, wherein an average particle diameter of the particles is 0.1 - 50 $\mu$m.

21. The method of manufacturing the image display device according to claim 19 or 20, wherein the difference of a surface charge density in an absolute value between two groups of the particles measured by using the same kind of carrier in accordance with a blow-off method is 5 - 150 $\mu$C/m$^2$.

22. The method of manufacturing the image display device according to one of claims 19 - 21, wherein the particles are particles in which the maximum surface potential, in the case that the surface of particles is charged by a generation of Corona discharge caused by applying a voltage of 8 KV to a Corona discharge device deployed at a distance of 1 mm from the surface of the particles, is greater than 300 V at 0.3 second after the Corona discharge.

23. The method of manufacturing the image display device according to one of claims 19 - 22, wherein a color of the particles is white or black.

24. An image display device **characterized in that** the improvement is manufactured in accordance with the method of manufacturing the image display device set forth in one of claims 19 - 23.

25. An image display device, in which the liquid powders, which indicate a high fluidity in an aerosol state such that solid-like substances are suspended in a gas stably as dispersoid, are sealed between opposed two substrates, at least one of two substrates being transparent, and, in which the liquid powders are made to move, **characterized in that** a member for transmitting a signal, which is applied to circuits for an image display, is provided to the substrate by means of an anisotropic conductive film.

26. The image display device according to claim 25, wherein the anisotropic conductive film is formed by scattering conductive particles in a thermosetting adhesive or a photo-curing adhesive.

27. The image display device according to claim 26, wherein a diameter of the conductive particles scattered in the thermosetting adhesive or the photo-curing adhesive is 0.1 - 20 $\mu$m.

28. The image display device according to claim 26 or 27, wherein the thermosetting adhesive or the photo-curing adhesive includes one or more groups of compounds having one of glycidyl group, acrylic group and methacrylic group.

29. An image display device which comprises an image display panel and an optical function member, in which the liquid powders, which indicate a high fluidity in an aerosol state such that solid-like substances are suspended in a gas stably as dispersoid, are sealed between opposed two substrates, at least one of two substrates being transparent, and, in which the liquid powders are made to move, **characterized in that** the image display panel and the optical function member are integrated through a transparent elastic layer.

30. The image display device according to claim 29, wherein, when it is assumed that a refractive index of the transparent elastic layer is $n_0$, a refractive index of the optical function member is $n_1$ and a refractive index of the transparent substrate is $n_2$, an absolute of a difference between $n_0$ and $n_1$ and an absolute of a difference between $n_0$ and $n_2$ are not greater than 0.2 respectively.

31. The image display device according to claim 29 or 30, wherein the transparent elastic layer has a property such that, when it is assumed that a strain $(\varepsilon_0)$ at 25 °C of a stress relaxation is 5 % and an initial value (after 0.05 sec) of a stress relaxation elastic modulus is $G_0$, $G_0$ is not greater than $6.5 \times 10^6$ Pa, and, a property such that a stress relaxation time $\tau$ calculated on the basis of a formula:

$$\ln G(t) = -t/\tau + \ln G_0$$

showing a relation between a stress relaxation elastic modulus G and a time t (sec) obtained from a damping curve of the relaxation elastic modulus, is not greater than 17 sec.

32. An image display device, in which the liquid powders, which indicate a high fluidity in an aerosol state such that solid-like substances are suspended in a gas stably as dispersoid, are sealed between opposed two substrates, at least one of two substrates being transparent, and, in which the liquid powders are made to move, **characterized in that** an anti-reflection layer having plural layers each indicating different refractive index is arranged on a surface of the transparent substrate.

33. The image display device according to claim 32, wherein the anti-reflection layer is constructed by stacking a low refraction layer produced by a sputtering process using a conductive silicon carbide as a target and a high refraction layer produced by a sputtering process using a conductive titanium dioxide as a target.

34. The image display device according to claim 32 or 33, wherein the anti-reflection layer prevents a light reflection of which wavelength is 380 - 780 nm and a light reflection rate is not greater than 10 %.

35. An image display device which comprises an image display panel, in which the liquid powders, which indicate a high fluidity in an aerosol state such that solid-like substances are suspended in a gas stably as dispersoid, are sealed between opposed two substrates, at least one of two substrates being transparent, and, in which the liquid powders, to which an electrostatic field produced by a pair of electrodes arranged on one substrate or both substrates is applied, are made to move so as to display an image, **characterized in that** two substrates of the image display panel are connected by using a thermosetting adhesive or a photo-curing adhesive.

36. The image display device according to claim 35, wherein the thermosetting adhesive or the photo-curing adhesive includes one or more groups of compounds having one of glycidyl group, acrylic group and methacrylic group.

37. An image display device which comprises an image display panel, in which the liquid powders, which indicate a high fluidity in an aerosol state such hat solid-like substances are suspended in a gas stably as dispersoid, are sealed between opposed two substrates, at least one of two substrates being transparent, and, in which the liquid powders, to which an electrostatic field produced by a pair of electrodes having different potentials is applied, are made to move so as to display an image, **characterized in that** one or more image display elements are formed by using a partition wall and the partition wall has such a shape that a bottom width wb at a side of an opposed substrate is larger than a top width wt at a side of a transparent substrate.

38. The image display device according to claim 37, wherein a ratio wt/wb between the bottom width wb at a side of the opposed substrate and the top width wt at a side of the transparent substrate is not greater than 0.5.

39. The image display device according to one of claims 25 - 38, wherein an apparent volume in a maximum floating state of the liquid powders is two times or more than that in none floating state.

40. The image display device according to one of claims 25 - 29, wherein a time change of the apparent volume of the liquid powders satisfies the following formula:

$$V_{10}/V_5 > 0.8;$$

here, $V_5$ indicates the apparent volume (cm$^3$) of the liquid powders after 5 minutes from the maximum floating state; and $V_{10}$ indicates the apparent volume (cm$^3$) of the liquid powders after 10 minutes from the maximum floating state.

41. The image display device according to one of claims 25 - 40, wherein an average particle diameter d(0.5) of the liquid powders is 0.1 - 20 µm.

42. A method of manufacturing an image display device which comprises an image display panel, in which the liquid powders, which indicate a high fluidity in an aerosol state such that solid-like substances are suspended in a gas stably as dispersoid, are sealed between opposed two substances, at least one of two substrates being transparent, in which the liquid powders, to which an electrostatic field produced by a pair of electrodes having different potentials is applied are made to move so as to display an image, and, in which one or more image display elements are formed by using a partition wall, **characterized in that** the improvement comprises the steps of: forming the partition wall on one or both of a transparent substrate and an opposed substrate; arranging an adhesive at a tip of the partition wall; and connecting the partition wall and the other substrate or both partition walls through the adhesive.

43. The image display device according to claim 42, wherein an apparent volume in a maximum floating state of the liquid powders is two times or more than that in none floating state.

44. The image display device according to claim 42 or 43, wherein a time change of the apparent volume of the liquid powders satisfies the following formula:

$$V_{10}/V_5 > 0.8;$$

here, $V_5$ indicates the apparent volume ($cm^3$) of the liquid powders after 5 minutes from the maximum floating state; and $V_{10}$ indicates the apparent volume ($cm^3$) of the liquid powders after 10 minutes from the maximum floating state.

45. The image display device according to one of claims 42 - 44, wherein an average particle diameter d(0.5) of the liquid powders is 0.1 - 20 µm.

46. An image display device **characterized in that** the improvement is manufactured in accordance with the method of manufacturing the image display device set forth in one of claims 42 - 45.

# FIG. 1

## FIG. 2

## FIG. 3

# FIG. 4

# FIG. 5

# FIG. 6

# FIG. 7

(a)

(b)

(c)

# FIG. 8

# FIG. 9

# FIG. 10

# FIG. 11

Reflection density

Applied voltage

Minimum drive voltage

(Threshold value)

## FIG. 12

# FIG. 13

(a)

(b)

(c)

# FIG. 14

(a)

(b)

(c)

# FIG. 15

(a)

$wt$

1

7

2

$wb$

(b)

$wt$

1

7

2

$wb$

# FIG. 16

3    1

7

6    5    7

2

4

# FIG. 17

41

2

42

7                                    7

2

Transfer thermoplastic resin
by using mold

wt

5        6

7                                    7

2

wt=20, wb=50

wb

1        5

7                                    7

2

6

# FIG. 18

UV hardening type resin was supplied in die and hardened by UV

wt=0, wb=50

# FIG. 19

Exposing and developing by photo lithography method

It is necessary to remove particles sufficiently

$wt$

$wt=50, wb=50$

$wb$

# FIG. 20

# FIG. 21

# FIG. 22

Printing adhesive on partition
wall by screen-printing

Connecting upper panel by
heat and pressure

# FIG. 23

7

5

2

6

5

1

53

7

2

6

Printing UV hardening
adhesive on upper panel

5

1

53

7

2

6

Connecting upper panel by
pressure and UV hardening

# FIG. 24

Only positioning and stacking

**INTERNATIONAL SEARCH REPORT**

International application No.

PCT/JP03/07892

Continuation of Box No. II of continuation of first sheet (1)

the common technical feature of claims 19-24, and common the technical feature of claims 25-46 are different from one another. Therefore, no technical relationship within the meaning of PCT Rule 13 can be seen. Consequently, claims 1-46 do not satisfy the requirement of unity of invention.

Form PCT/ISA/210 (extra sheet) (July 1998)